(19) Europäisches Patentamt
European Patent Office
Office européen des brevets

(11) **EP 2 723 075 A2**

(12) **EUROPEAN PATENT APPLICATION**
published in accordance with Art. 153(4) EPC

(43) Date of publication:
**23.04.2014 Bulletin 2014/17**

(51) Int Cl.:
***H04N 7/30*** *(0000.00)*

(21) Application number: **12803459.2**

(86) International application number:
**PCT/KR2012/004811**

(22) Date of filing: **18.06.2012**

(87) International publication number:
**WO 2012/177027 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2011 US 201161498530 P**
**28.06.2011 US 201161501943 P**

(71) Applicant: **Samsung Electronics Co., Ltd.**
**Suwon-si, Gyeonggi-do 443-742 (KR)**

(72) Inventors:
• **ALSHINA, Elena**
**Suwon-si**
**Gyeonggi-do 443-744 (KR)**
• **ALSHIN, Alexander**
**Suwon-si**
**Gyeonggi-do 443-744 (KR)**

(74) Representative: **Davies, Robert Ean**
**Appleyard Lees**
**15 Clare Road**
**Halifax**
**Yorkshire HX1 2HY (GB)**

(54) **METHOD AND DEVICE FOR THE TRANSFORMATION AND METHOD AND DEVICE FOR THE REVERSE TRANSFORMATION OF IMAGES**

(57) Provided are methods and apparatuses for transforming and inverse-transforming an image. The method of transforming an image includes: obtaining scaled elements having integer values by scaling elements forming a transformation matrix used for N point discrete cosine transform (DCT), wherein N is an integer, by using a predetermined scaling factor; performing the N point DCT by using an integer transformation matrix formed of the scaled elements having integer values; and de-scaling result values of performing the N point DCT by using the predetermined scaling factor.

FIG. 3

START

OBTAIN SCALED ELEMENTS HAVING INTEGER VALUES BY SCALING ELEMENTS FORMING TRANSFORMATION MATRIX USED FOR 32 POINT DCT BY USING PREDETERMINED SCALING FACTOR — 310

PERFORM N POINT DCT BY USING TRANSFORMATION MATRIX FORMED OF SCALED ELEMENTS HAVING INTEGER VALUES — 320

DE-SCALE RESULT VALUES OF PERFORMING N POINT DCT BY USING SCALING FACTOR — 330

END

EP 2 723 075 A2

**Description**

TECHNICAL FIELD

The present invention relates to methods and apparatuses for encoding and decoding an image, and more particularly, to methods and apparatuses for transforming and inverse-transforming a block having a large size.

BACKGROUND ART

According to a current international video coding standard, such as H.264 or MPEG-4, a video signal is hierarchically divided into a sequence, a frame, a slice, a macroblock, and a block, wherein the block is a minimum processing unit. In terms of encoding, a prediction remaining error of the block is determined via intra-frame or inter-frame prediction, block transformation is performed such that energy is focused on a coefficient of a decimal, and image data is compressed and recorded as a coded bitstream via quantization, scanning, run length coding, and entropy coding. In terms of decoding, processes are performed in the opposite order. First, a block transformation coefficient of entropy coding is extracted from a bitstream. Then, a prediction remaining error of a block is reconstructed via inverse-quantization and inverse-transformation, and prediction information is used to reconstruct video data of the block. In an encoding-decoding process, a transformation module is a base of video compression, and transformation performance of the transformation module directly affects general performance of a codec.

Discrete cosine transform (DCT) is employed in an initial video coding standard, such as MPEG-1 or H.261. After the DCT was introduced in 1974, the DCT has been widely used in image and video coding fields. Transformation performance of the DCT is excellent compared to all sub-optimal transforms since the DCT removes correlation of image elements in a transformation domain and provides a base for high efficiency image compression. However, since a DCT matrix is expressed using a floating point number, many system resources are used due to massive floating point operations. Accordingly, a new DCT algorithm is required so as to improve transformation efficiency while performing transformation on a block having a large size.

DETAILED DESCRIPTION OF THE INVENTION

TECHNICAL PROBLEM

The present invention provides methods and apparatuses for transforming and inverse-transforming an image by using an effective discrete cosine transform (DCT). In detail, the present invention provides methods and apparatuses for transforming and inverse-transforming an image, which perform a similar DCT while reducing a number of multiplications to reduce calculation complexity and expenses for realizing hardware, during a DCT having a large size.

TECHNICAL SOLUTION

According to one or more embodiments of the present invention, elements of a discrete cosine transform (DCT) matrix are scaled to obtain a DCT having integer values, and calculation complexity is reduced by replacing an operation corresponding to rational transform performed in a transform algorithm based on a DCT matrix with an alternative operation having a reduced number of multiplications.

ADVANTAGEOUS EFFECTS

In methods and apparatuses for transforming and inverse-transforming an image according to one or more embodiments of the present invention, complexity may be reduced and an operation speed may be increased while transforming and inverse-transforming a block having a large size, by performing an operation process based on an integer, instead of a floating point operation. Also, calculation complexity may be reduced by reducing a number of multiplications performed during a discrete cosine transform (DCT) and an inverse discrete cosine transform (IDCT).

DESCRIPTION OF THE DRAWINGS

FIG. 1 is a block diagram of an image encoding apparatus according to an embodiment of the present invention.
FIG. 2 is a flow graph of a 32 point discrete cosine transform (DCT), according to an embodiment of the present invention.

FIG. 3 is a flowchart illustrating a method of transforming an image, according to an embodiment of the present invention.

FIG. 4 is a flow graph of processes of 32 point, 16 point, 8 point, and 4 point DCTs, according to an embodiment of the present invention.

FIG. 5 is a reference table for describing each operation element of FIG. 4.

FIG. 6 is a reference diagram for describing an operation process of rotational transform included in the 32 point DCT of FIG. 2.

FIGS. 7A through 7C are diagrams for describing an operation 440 of FIG. 4.

FIG. 8 is a block diagram of an apparatus for inverse-transforming an image, according to an embodiment of the present invention.

FIG. 9 is a flowchart illustrating a method of inverse-transforming an image, according to an embodiment of the present invention.

FIG. 10 is a flow graph of processes of 32 point, 16 point, 8 point, and 4 point inverse DCTs (IDCTs), according to an embodiment of the present invention.

BEST MODE

According to an aspect of the present invention, there is provided a method of transforming an image, the method comprising: obtaining scaled elements having integer values by scaling elements forming a transformation matrix used for N point discrete cosine transform (DCT), wherein N is an integer, by using a predetermined scaling factor; performing the N point DCT by using an integer transformation matrix formed of the scaled elements having integer values; and de-scaling result values of performing the N point DCT by using the predetermined scaling factor.

According to another aspect of the present invention, there is provided an apparatus for transforming an image, the apparatus comprising a transformer for obtaining scaled elements having integer values by scaling elements forming a transformation matrix used for N point discrete cosine transform (DCT), wherein N is an integer, by using a predetermined scaling factor, performing the N point DCT by using an integer transformation matrix formed of the scaled elements having integer values, and de-scaling result values of performing the N point DCT by using the predetermined scaling factor.

According to another aspect of the present invention, there is provided a method of inverse-transforming an image, the method comprising: obtaining scaled elements having integer values by scaling elements forming an inverse transformation matrix used for N point inverse discrete cosine transform (IDCT), wherein N is an integer, by using a predetermined scaling factor; performing the N point IDCT by using an integer inverse transformation matrix formed of the scaled elements having integer values; and

de-scaling result values of performing the N point IDCT by using the predetermined scaling factor.

According to another aspect of the present invention, there is provided an apparatus for inverse-transforming an image, the apparatus comprising: an inverse-transformer for obtaining scaled elements having integer values by scaling elements forming an inverse transformation matrix used for N point inverse discrete cosine transform (IDCT), wherein N is an integer, by using a predetermined scaling factor, performing the N point IDCT by using an integer inverse transformation matrix formed of the scaled elements having integer values, and de-scaling result values of performing the N point IDCT by using the predetermined scaling factor.

MODE OF THE INVENTION

Hereinafter, the present invention will be described more fully with reference to the accompanying drawings, in which exemplary embodiments of the invention are shown.

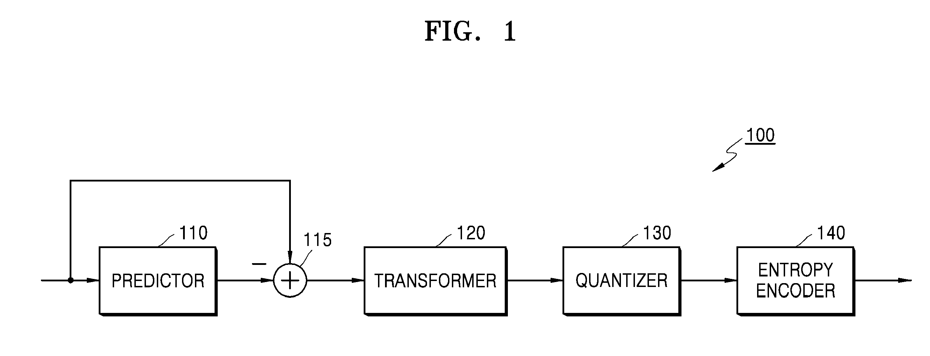

FIG. 1 is a block diagram of an image encoding apparatus 100 according to an embodiment of the present invention.

Referring to FIG. 1, the image encoding apparatus 100 includes a predictor 110, a subtractor 115, a transformer 120, a quantizer 130, and an entropy encoder 140.

The predictor 110 divides an input image into blocks having a predetermined size, and generates a prediction block by performing inter prediction or intra prediction on each block. In detail, the predictor 110 performs inter prediction for generating a prediction block through motion prediction and compensation processes, which generate a motion vector indicating a region similar to a current block within a predetermined search range of a reference picture that is pre-encoded and restored, and intra prediction for generating a prediction block by using data of an adjacent block that is adjacent to a current block.

The subtractor 115 generates a residual by subtracting the prediction block of the current block from original image data.

The transformer 120 transforms the residual to a frequency region. In detail, the transformer 120 may enlarge a discrete cosine transform (DCT) matrix that is defined with respect to a block having a small size, such as 4x4 or 8x8, so as to be applied to a block having a size of at least 16x16. As will be described below, the transformer 120 generates an N point DCT matrix formed of elements having integer values by scaling elements of a transformation matrix used for N point DCT, wherein N is an integer, by using a predetermined scaling factor, and performs an N point DCT by using the generated N point DCT matrix. Also, the transformer 120 performs de-scaling by using the predetermined scaling factor with respect to result values of the N point DCT matrix using the scaled elements, while considering differences with result values of an original N point DCT matrix. As described later, such scaling and de-scaling processes may be realized in shift operations (>> and <<) if the predetermined scaling factor has a value of power of 2. Such shift operations may be realized simply compared to a multiplication, and thus have low calculation complexity compared to a multiplication. Accordingly, the transformer 120 may reduce calculation complexity while increasing an operation speed during a DCT performed on a block having a large size. Also, in order to reduce a number of multiplications required during operation processes according to an N point DCT matrix, the transformer 120 performs operations corresponding to rotational transform through alternative operations in which the number of multiplications is reduced, thereby reducing a total number of multiplications required for an N point DCT and reducing overall calculation complexity.

The quantizer 130 quantizes the transformed residual. The quantizer 130 may perform a de-scaling process by using the predetermined scaling factor during a quantization process, so as to compensate for differences between result values transformed by using the N point DCT matrix formed of the scaled elements having integer values and result values based on the original N point DCT matrix. In other words, the de-scaling process performed by the transformer 120 may be combined to the quantization process performed by the quantizer 130, as will be described later.

The entropy encoder 140 generates a bitstream by performing variable length encoding on quantized image data.

Hereinafter, the transformation process performed by the transformer 120 of FIG. 1 will be described in detail.

The transformer 120 generates an NxN transformation block by performing column-wise transform and row-wise transform on an NxN input block, wherein N is an integer. When Input denotes the NxN input block, Transform_hor denotes a DCT matrix in a row direction, Transform_ver denotes a DCT matrix in a column direction, and Output denotes a result value, the transformer 120 outputs the result value Output by performing an N point DCT matrix operation according to an equation; Output = Transform_hor x Input x Transform_ver. Here, the first matrix multiplication Transform_hor x Input corresponds to performing a 1-dimensional (1D) horizontal direction N point DCT on each row of the NxN input block Input, and multiplying Transform_ver to Transform_hor x Input corresponds to performing a 1D vertical direction N point DCT. The DCT matrix Transform_hor in the row direction and the DCT matrix Transform_ver in the column direction are in a transposed matrix relationship. An N point DCT performed with respect to a row direction and a column direction will now be described.

When $A_{kn}$ denotes a (k,n)th element of the N point DCT matrix, wherein k and n each denote an integer from 0 to (N-1), the (k,n)th element $A_{kn}$ of the N point DCT matrix in a vertical or horizontal direction for transforming the NxN input block may be defined according to Equation 1 below.

[Equation 1]

$$A_{kn} = C \cdot \sqrt{2} \cdot \cos\left(\frac{\pi(2n+1)k}{2N}\right)$$

Since an N point DCT matrix and an N point inverse DCT (IDCT) matrix are in a transposed relationship, a (k,n)th element $B_{kn}$ of the N point IDCT may be defined according to Equation 2 below.

[Equation 2]

$$B_{kn} = iC \cdot \sqrt{2} \cdot \cos\left(\frac{\pi(2n+1)k}{2N}\right)$$

In Equations 1 and 2, C and iC denote coefficient values satisfying C*iC=2/(N^2). Since an operation process of multiplying C and iC may be realized in a shift operation by being combined to a quantization process after a transformation process, replacing a $\sqrt{2} \cdot \cos\left(\frac{\pi(2n+1)k}{2N}\right)$ component included in the N point DCT matrix and N point IDCT matrix by an integer value will be mainly described. Also, hereinafter, $\pi$ may also be represented as pi.

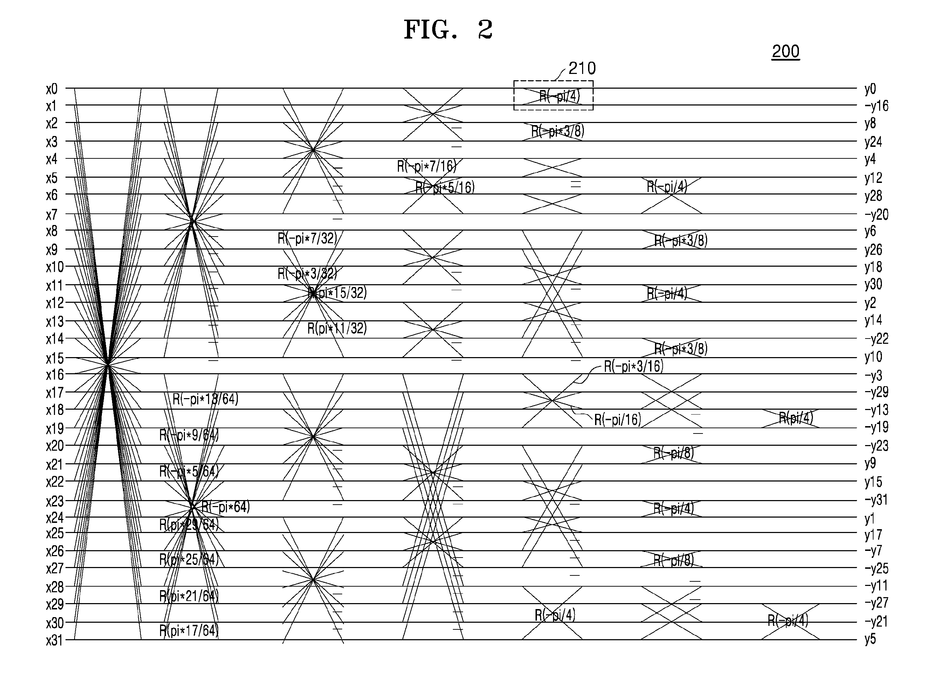

FIG. 2 is a flow graph 200 of a 32 point DCT according to an embodiment of the present invention.

A DCT matrix formed of elements defined according to Equation 1 may be realized through the flow graph 200 of FIG. 2.

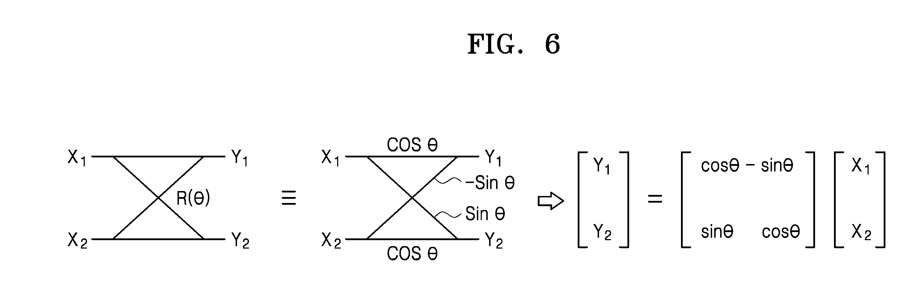

In detail, referring to FIG. 2, X0 through X31 denote input values of the 32 point DCT. Y0 through Y31 denote result values according to the 32 point DCT. Alternatively, when Y0 through Y31 denote input values, X0 through X31 denote output values of a 32 point IDCT. In other words, X0 through X31 denote the input values of the 32 point DCT and also denote the output values of the 32 point IDCT. During the 32 point DCT, a data processing direction is from left to right, and during the 32 point IDCT, a data processing direction is from right to left. Two lines crossing at a point denote addition of two numbers. '-' denotes a negation, and outputs -X when X denotes a value passing a corresponding line. A value R($\theta$) above each line denotes an operation corresponding to rotational transform, wherein an input value is rotational-transformed by $\theta$, and denotes an operation of adding or subtracting a value obtained by multiplying cos$\theta$ or sin$\theta$ to a value input through each line. An operation of rotational transform of FIG. 2 will be described in detail below with reference to FIG. 6.

FIG. 2 illustrates the flow graph 200 of the 32 point DCT, but a flow graph of a 16 point DCT may be obtained by selecting even-th and odd-th inputs from the flow graph 200 of the 32 point DCT, or a flow graph of an 8 point DCT may be obtained by selecting even-th and odd-th inputs from the flow graph of the 16 point DCT. Similarly, flow graphs of 4 point DCT and 2 point DCT may be obtained from the flow graph 200 of FIG. 2.

R($\theta$) indicated at some lines in FIG. 2 denote an operation of rotational-transforming an input value by $\theta$. For example, an operation 210 of FIG. 2 will now be described with reference to FIG. 6.

FIG. 6 is a reference diagram for describing an operation process of rotational transform included in the 32 point DCT of FIG. 2.

Referring to FIG. 6, in the operation 210 of FIG. 2, output values [Y1, Y2] are output by through an equation;

$$\begin{bmatrix} Y1 \\ Y2 \end{bmatrix} = \begin{bmatrix} \cos\theta & -\sin\theta \\ \sin\theta & \cos\theta \end{bmatrix} \begin{bmatrix} X1 \\ X2 \end{bmatrix}$$ with respect to input values [X1, X2]. The operation 210 corresponds to rotational transform for outputting a value obtained by rotating (x1, x2) by $\theta$.

When an N point DCT is performed according to the flow graph 200 of FIG. 2, cos$\theta$ and sin$\theta$ are multiplied by an input value, according to R($\theta$). Since cos$\theta$ and sin$\theta$ are irrational numbers, complexity is increased if multiplication processes using cos$\theta$ and sin$\theta$ are realized in hardware except when $\theta$ is 0, pi/2, pi/3, or pi/6. Accordingly, the transformer 120 generates a DCT matrix formed of elements having integer values by multiplying a predetermined scaling factor by elements included in a DCT matrix, and then rounding off the elements, and then de-scales result values of performing a DCT by using the predetermined scaling factor.

Hereinafter, a process of generating a DCT matrix formed of elements having integer values, according to an embodiment of the present invention will be described in detail.

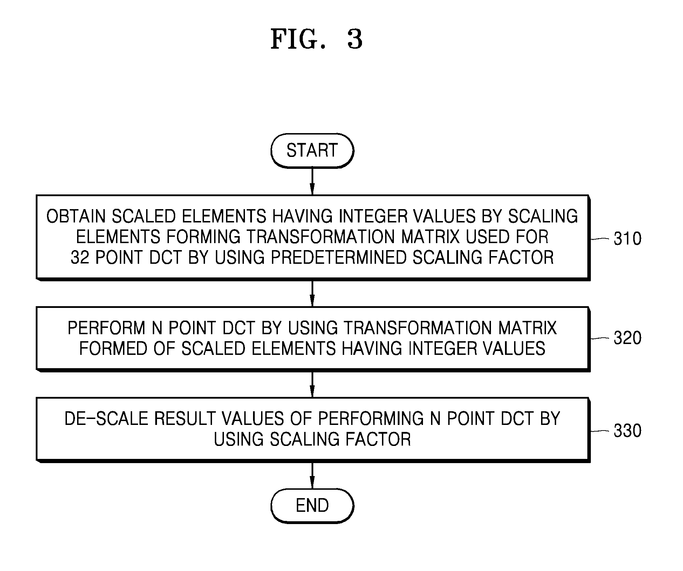

FIG. 3 is a flowchart illustrating a method of transforming an image, according to an embodiment of the present invention.

Referring to FIGS. 1 and 3, the transformer 120 obtains elements having integer values by multiplying a scaling factor S to each element forming a transformation matrix for an N point DCT and then rounding off each element, in operation 310.

As described above, the transformation matrix includes a component of $\sqrt{2} \cdot \cos(\frac{\pi(2n+1)k}{2N})$. The transformer 120 obtains the integer values by multiplying the scaling factor S and $\sqrt{2} \cdot \cos(\frac{\pi(2n+1)k}{2N})$, and then rounding off a result vlaue. When int(x) denotes an integer value obtained by rounding off x, wherein x is a real number, sqrt(x) denotes a square root of x, and S denotes a scaling factor, it is assumed that an element obtained by transforming $\sqrt{2} \cdot \cos(\frac{\pi(2n+1)k}{2N})$ to an integer value by the transformer 120 is represented by int(cos((2n+1)k)*sqrt(2.0)*S), and such an element int(cos((2n+1)k)*sqrt(2.0)*S) is shown as COS_((2n+1)k)_SQRT_2.

For example, when an integer value is obtained by multiplying the scaling factor S and $\sqrt{2} \cdot \cos(\frac{\pi(2n+1)k}{2N})$ included in a transformation matrix for a 32 point DCT and then rounding off a result value, an element of transforming

$$\sqrt{2} \cdot \cos(\frac{\pi(2n+1)k}{2N})$$ to an integer value is defined as Table 1 below.

[Table 1]

| Sign | Scaled Element of Transformation Matrix for 32 Point DCT | Exemplary Value |
|---|---|---|
| SQRT_2 | int(sqrt(2.0) * S) | 90 |
| COS8_SQRT_2 | int(cos( 8*pi/64) *sqrt(2.0) * S) | 83 |
| COS16_SQRT_2 | int(cos( 16*pi/64) *sqrt(2.0) * S) | 64 |
| COS24_SQRT_2 | int(cos( 24*pi/64) *sqrt(2.0) * S) | 36 |
| COS4_SQRT_2 | int(cos( 4*pi/64) * S) | 63 |
| COS12_SQRT_2 | int(cos( 12*pi/64) * S) | 53 |
| COS20_SQRT_2 | int(cos( 20*pi/64) * S) | 36 |
| COS28_SQRT_2 | int(cos( 28*pi/64) * S) | 12 |
| COS2_SQRT_2 | int(cos(2*pi/64) * S) | 64 |
| COS6_SQRT_2 | int(cos( 6*pi/64) * S) | 61 |
| COS10_SQRT_2 | int(cos( 10*pi/64) * S) | 56 |
| COS14_SQRT_2 | int(cos( 14*pi/64) * S) | 49 |
| COS18_SQRT_2 | int(cos( 18*pi/64) * S) | 41 |
| COS22_SQRT_2 | int(cos( 22*pi/64) * S) | 30 |
| COS26_SQRT_2 | int(cos( 26*pi/64) * S) | 19 |
| COS30_SQRT_2 | int(cos( 30*pi/64) * S) | 6 |
| COS1_SQRT_2 | int(cos( 1 *pi/64) * S) | 64 |
| COS3_SQRT_2 | int(cos( 3*pi/64) * S) | 63 |
| COS5_SQRT_2 | int(cos( 5*pi/64) * S) | 62 |
| COS7_SQRT_2 | int(cos( 7*pi/64) * S) | 60 |
| COS9_SQRT_2 | int(cos( 9*pi/64) * S) | 58 |
| COS11_SQRT_2 | int(cos( 11*pi/64) * S) | 55 |
| COS13_SQRT_2 | int(cos( 13*pi/64) * S) | 51 |
| COS15_SQRT_2 | int(cos(15*pi/64) * S) | 47 |
| COS17_SQRT_2 | int(cos( 17*pi/64) * S) | 43 |
| COS19_SQRT_2 | int(cos( 19*pi/64) * S) | 38 |
| COS21_SQRT_2 | int(cos( 21*pi/64) * S) | 33 |
| COS23_SQRT_2 | int(cos( 23*pi/64) * S) | 27 |
| COS25_SQRT_2 | int(cos( 25*pi/64) * S) | 22 |
| COS27_SQRT_2 | int(cos( 27*pi/64) * S) | 16 |
| COS29_SQRT_2 | int(cos( 29*pi/64) * S) | 9 |
| COS31_SQRT_2 | int(cos( 31 *pi/64) * S) | 3 |
| COS4_SQRT_2 | int(cos( 4*pi/64) *sqrt(2.0) * S) | 89 |
| COS12_SQRT_2 | int(cos( 12*pi/64) *sqrt(2.0) * S) | 75 |
| COS20_SQRT_2 | int(cos( 20*pi/64) *sqrt(2.0) * S) | 50 |

(continued)

| Sign | Scaled Element of Transformation Matrix for 32 Point DCT | Exemplary Value |
|---|---|---|
| COS28_SQRT_2 | int(cos( 28*pi/64) *sqrt(2.0) * S) | 18 |

In Table 1, SQRT_2 denotes an element obtained by transforming $\sqrt{2} \cdot \cos(0)$ to an integer value when k is 0 in $\sqrt{2} \cdot \cos(\frac{\pi(2n+1)k}{2N})$. Table 1 shows an integer value used instead of $\sqrt{2} \cdot \cos(\frac{\pi(2n+1)k}{2N})$ when the scaling factor S is 2^6, i.e., 64. For example, cos(7*pi/64)*64 has a value of about 60.2588, and has a value of 60 when rounded off. Accordingly, the transformer 120 performs transformation by using COS7_SQRT_2(=60) obtained by rounding off cos(7*pi/64)*64, instead of cos(7*pi/64)*64.

The transformer 120 performs a left shift operation (<<) using the scaling factor S on the value obtained by multiplying the scaling factor S to each element of the transformation matrix for the N point DCT and then rounding off each element. When S_BIT is defined to be $\log_2 S$, the transformer 120 obtains the transformation matrix for the N point DCT by performing the left shift operation (<<) again by S_BIT on COS_((2n+1)_SQRT_2. Since S=1<<S_BIT, the left shift operation (<<) performed again by S_BIT on COS_((2n+1)k)_SQRT_2 corresponds to multiplying the scaling factor S. Accordingly, as a result, the transformer 120 scales the elements of the transformation matrix for the N point DCT by S^2 by multiplying the scaling factor S again to the result value obtained by multiplying the scaling factor and the elements of the transformation matrix of the N point DCT and then rounding off the elements. DCT_4x4[4][4] that is a transformation matrix of a 4 point DCT, DCT_16x16[16][16] that is a transformation matrix of an 8 point DCT, DCT_16x16[16][16] that is a transformation matrix of a 16 point DCT, and DCT_32x32[32][32] that is a transformation matrix of a 32 point DCT, which are obtained via such a scaling process, may be expressed as follows by using the sign shown in Table 1.

```
DCT_4x4[4][4] = {
 { COS16_SQRT_2<<S_BIT, COS16_SQRT_2<<S_BIT, COS16_SQRT_2<<S_BIT,
 COS16_SQRT_2<<S_BIT},
 { COS8_SQRT_2<<S_BIT,
 COS24_SQRT_2<<S_BIT,-COS24_SQRT_2<<S_BIT,-COS8_SQRT_2<<S_BIT},
 { COS16_SQRT_2<<S_BIT,-COS16_SQRT_2<<S_BIT,-COS16_SQRT_2<<S_BIT,
 COS16_SQRT_2<<S_BIT},
 { COS24_SQRT_2<<S_BIT,-COS8_SQRT_2<<S_BIT,
 COS8_SQRT_2<<S_BIT,-COS24_SQRT_2<<S_BIT}
};
DCT_8x8[8][8] = {
 { COS16_SQRT_2<<S_BIT, COS16_SQRT_2<<S_BIT, COS16_SQRT_2<<S_BIT,
 COS16_SQRT_2<<S_BIT, COS16_SQRT_2<<S_BIT, COS16_SQRT_2<<S_BIT,
 COS16_SQRT_2<<S_BIT, COS16_SQRT_2<<S_BIT
 { (COS12+COS20)<<S_BIT, (COS4+COS28)«S_BIT, (COS4-COS28)<<S_BIT,
 (COS12-COS20)<<S_BIT,-((COS12-COS20)<<S_BIT),-((COS4-COS28)<<S_BIT),-((C
 OS4+COS28)<<S_BIT),-((COS12+COS20)<<S_BIT)},
 { COS8_SQRT_2<<S_BIT,
 COS24_SQRT_2<<S_BIT,-COS24_SQRT_2<<S_BIT,-COS8_SQRT_2<<S_BIT,-COS
 8_SQRT_2<<S_BIT,-COS24_SQRT_2<<S_BIT, COS24_SQRT_2<<S_BIT,
 COS8_SQRT_2<<S_BIT},
 { COS12*SQRT_2,-COS28*SQRT_2,-COS4*SQRT_2,-COS20*SQRT_2,
 COS20*SQRT_2, COS4*SQRT_2, COS28*SQRT_2,-COS12*SQRT_2},
 { COS16_SQRT_2<<S_BIT,-COS16_SQRT_2<<S_BIT,-COS16_SQRT_2<<S_BIT,
 COS16_SQRT_2<<S_BIT,
 COS16_SQRT_2<<S_BIT,-COS16_SQRT_2<<S_BIT,-COS16_SQRT_2<<S_BIT,
 COS16_SQRT_2<<S_BIT},
 { COS20*SQRT_2,-COS4*SQRT_2, COS28*SQRT_2,
 COS12*SQRT_2,-COS12*SQRT_2,-COS28*SQRT_2,
 COS4*SQRT_2,-COS20*SQRT_2},
 { COS24_SQRT_2<<S_BIT,-COS8_SQRT_2<<S_BIT,
 COS8_SQRT_2<<S_BIT,-COS24_SQRT_2<<S_BIT,-COS24_SQRT_2<<S_BIT,
 COS8_SQRT_2<<S_BIT,-COS8_SQRT_2<<S_BIT, COS24_SQRT_2<<S_BIT},
 { (COS12-COS20)<<S_BIT,-((COS4-COS28)<<S_BIT),
 (COS4+COS28)<<S_BIT,-((COS12+COS20)<<S_BIT),
```

```
(COS12+COS20)<<S_BIT,-((COS4+COS28)<<S_BIT),
(COS4-COS28)<<S_BIT,-((COS12-COS20)<<S_BIT)}
};
DCT_16x16[16][16] = {
  { COS16_SQRT_2<<S_BIT,COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT},
  { (COS14+COS18)<<S_BIT, (COS10+COS22)<<S_BIT,
  (COS6+COS26)<<S_BIT, (COS2+COS30)<<S_BIT, (COS2-COS30)<<S_BIT,
  (COS6-COS26)<<S_BIT, (COS10-COS22)<<S_BIT, (COS14-COS18)<<S_BIT,
  -(COS14-COS18)<<S_BIT,-(COS10-COS22)<<S_BIT,-(COS6-COS26)<<S_BIT,-(COS
  2-COS30)<<S_BIT,-(COS2+COS30)<<S_BIT,-(COS6+COS26)<<S_BIT,-(COS10+CO
  S22)<<S_BIT,-(COS14+COS18)<<S_BIT},
  { ((COS12+COS20)<<S_BIT), ((COS4+COS28)<<S_BIT),
  ((COS4-COS28)<<S_BIT),
  ((COS12-COS20)<<S_BIT),-((COS12-COS20)<<S_BIT),-((COS4-COS28)<<S_BIT),-((
  COS4+COS28)<<S_BIT),-((COS12+COS20)<<S_BIT),-((COS12+COS20)<<S_BIT),-((
  COS4+COS28)<<S_BIT),-((COS4-COS28)<<S_BIT),-((COS 12-COS20)<<S_BIT),
  ((COS12-COS20)<<S_BIT), ((COS4-COS28)<<S_BIT), ((COS4+COS28)<<S_BIT),
  ((COS12+COS20)<<S_BIT)},
  { (COS24_SQRT_2*COS18+COS8_SQRT_2*COS14),
  (COS10*COS8_SQRT_2-COS22*COS24_SQRT_2),
  (COS6*COS24_SQRT_2-COS8_SQRT_2*COS26),-(COS30*COS8_SQRT_2+COS2*
  COS24_SQRT_2),-(COS2*COS8_SQRT_2-COS24_SQRT_2*COS30),-(COS24_SQR
  T_2*COS26+COS8_SQRT_2*COS6),-(COS10*COS24_SQRT_2+COS22*COS8_SQR
  T_2),-(COS18*COS8_SQRT_2-COS14*COS24_SQRT_2),
  (COS18*COS8_SQRT_2-COS14*COS24_SQRT_2),
  (COS10*COS24_SQRT_2+COS22*COS8_SQRT_2),
  (COS24_SQRT_2*COS26+COS8_SQRT_2*COS6),
  (COS2*COS8_SQRT_2-COS24_SQRT_2*COS30),
  (COS30*COS8_SQRT_2+COS2*COS24_SQRT_2),
  -(COS6*COS24_SQRT_2-COS8_SQRT_2*COS26),-(COS10*COSB_SQRT_2-COS22*
  COS24_SQRT_2),-(COS24_SQRT_2*COS18+COS8_SQRT_2*COS14)},
  { COS8_SQRT_2<<S_BIT,
  COS24_SQRT_2<<S_BIT,-COS24_SQRT_2<<S_BIT,-COS8_SQRT_2<<S_BIT,-COS
  8_SQRT_2<<S_BIT,-COS24_SQRT_2<<S_BIT, COS24_SQRT_2<<S_BIT,
  COS8_SQRT_2<<S_BIT, COS8_SQRT_2<<S_BIT,
  COS24_SQRT_2<<S_BIT,-COS24_SQRT_2<<S_BIT,-COS8_SQRT_2<<S_BIT,-COS
  8_SQRT_2<<S_BIT,-COS24_SQRT_2<<S_BIT, COS24_SQRT_2<<S_BIT,
  COS8_SQRT_2<<S_BIT},
  { (COS24_SQRT_2*COS14+COS8_SQRT_2*COS18),
  (COS8_SQRT_2*COS22-COS24_SQRT_2*COS10),-(COS8_SQRT_2*COS6-COS24_
  SQRT_2*COS26),-(COS24_SQRT_2*COS30+COS8_SQRT_2*COS2),-(COS24_SQR
  T_2*COS2-COS8_SQRT_2*COS30),
  (COS24_SQRT_2*COS6+COS8_SQRT_2*COS26),
  (COS22*COS24_SQRT_2+COS8_SQRT_2*COS10),
  (-COS24_SQRT_2*COS18+COS8_SQRT_2*COS14),-(-COS24_SQRT_2*COS18+CO
  S8_SQRT_2*COS14),-(COS22*COS24_SQRT_2+COS8_SQRT_2*COS10),-(COS24_
  SQRT_2*COS6+COS8_SQRT_2*COS26),
  (COS24_SQRT_2*COS2-COS8_SQRT_2*COS30),
  (COS24_SQRT_2*COS30+COS8_SQRT_2*COS2),
  (COS8_SQRT_2*COS6-COS24_SQRT_2*COS26),
  -(COS8_SQRT_2*COS22-COS24_SQRT_2*COS10),-(COS24_SQRT_2*COS14+COS
  8_SQRT_2*COS18)},
  { COS12*SQRT_2,-COS28*SQRT_2,-COS4*SQRT_2,-COS20*SQRT_2,
  COS20*SQRT_2, COS4*SQRT_2,
  COS28*SQRT_2,-COS12*SQRT_2,-COS12*SQRT_2, COS28*SQRT_2,
  COS4*SQRT_2,
  COS20*SQRT_2,-COS20*SQRT_2,-COS4*SQRT_2,-COS28*SQRT_2,
  COS12*SQRT_2},
```

```
{ COS14*SQRT_2,-COS22*SQRT_2,-COS6*SQRT_2, COS30*SQRT_2,
COS2*SQRT_2, COS26*SQRT_2,-COS10*SQRT_2,-COS18*SQRT_2,
COS18*SQRT_2, COS10*SQRT_2,-COS26*SQRT_2,-COS2*SQRT_2,
-COS30*SQRT_2, COS6*SQRT_2, COS22*SQRT_2,-COS14*SQRT_2},
{ COS16_SQRT_2<<S_BIT,-COS16_SQRT_2<<S_BIT,-COS16_SQRT_2<<S_
BIT, COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT},
{ COS18*SQRT_2,-COS10*SQRT_2,-COS26*SQRT_2, COS2*SQRT_2,
-COS30*SQRT_2,-COS6*SQRT_2, COS22*SQRT_2,
COS14*SQRT_2,-COS14*SQRT_2,-COS22*SQRT_2, COS6*SQRT_2,
COS30*SQRT_2,-COS2*SQRT_2, COS26*SQRT_2,
COS10*SQRT_2,-COS18*SQRT_2},
{ COS20*SQRT_2,-COS4*SQRT_2, COS28*SQRT_2,
COS12*SQRT_2,-COS12*SQRT_2,-COS28*SQRT_2,
COS4*SQRT_2,-COS20*SQRT_2,-COS20*SQRT_2,
COS4*SQRT_2,-COS28*SQRT_2,-COS12*SQRT_2, COS12*SQRT_2,
COS28*SQRT_2,-COS4*SQRT_2, COS20*SQRT_2},
{ (-COS24_SQRT_2*COS18+COS8_SQRT_2*COS14),-(COS22*COS24_SQRT
_2+COS8_SQRT_2*COS10), (COS24_SQRT_2*COS6+COS8_SQRT_2*COS26),
(COS24_SQRT_2*COS2-COS8_SQRT_2*COS30),-(COS24_SQRT_2*COS30+COS8
_SQRT_2*COS2), (COS8_SQRT_2*COS6-COS24_SQRT_2*COS26),
(COS8_SQRT_2*COS22-COS24_SQRT_2*COS10),-(COS24_SQRT_2*COS14+COS
8_SQRT_2*COS18), (COS24_SQRT_2*COS14+COS8_SQRT_2*COS18),
-(COS8_SQRT_2*COS22-COS24_SQRT_2*COS10),-(COS8_SQRT_2*COS6-COS24
_SQRT_2*COS26),
(COS24_SQRT_2*COS30+COS8_SQRT_2*COS2),-(COS24_SQRT_2*COS2-COS8_
SQRT_2*COS30),-(COS24_SQRT_2*COS6+COS8_SQRT_2*COS26),
(COS22*COS24_SQRT_2+COS8_SQRT_2*COS10),-(-COS24_SQRT_2*COS18+CO
S8_SQRT_2*COS14)},
{ COS24_SQRT_2<<S_BIT,-COS8_SQRT_2<<S_BIT,
COS8_SQRT_2<<S_BIT,-COS24_SQRT_2<<S_BIT,-COS24_SQRT_2<<S_BIT,
COS8_SQRT_2<<S_BIT,-COS8_SQRT_2<<S_BIT, COS24_SQRT_2<<S_BIT,
COS24_SQRT_2<<S_BIT,-COS8_SQRT_2<<S_BIT,
COS8_SQRT_2<<S_BIT,-COS24_SQRT_2<<S_BIT,-COS24_SQRT_2<<S_BIT,
COS8_SQRT_2<<S_BIT,-COS8_SQRT_2<<S_BIT, COS24_SQRT_2<<S_BIT},
{ (COS18*COS8_SQRT_2-COS14*COS24_SQRT_2),-(COS10*COS24_SQRT_
2+COS22*COS8_SQRT_
(COS24_2*COS26+COS8_SQRT_2*COS6),-(COS2*COS8_SQRT_2-COS24_
SQRT_2*COS30), (COS30*COS8_SQRT_2+COS2*COS24_SQRT_2),
(COS5*COS24_SQRT_2-COS8_SQRT_2*COS26),-(COS10*COS8_SQRT_2-COS22*
COS24_SQRT_2),
(COS24_SQRT_2*COS18+COS8_SQRT_2*COS14),-(COS24_SQRT_2*COS18+COS
8_SQRT_2*COS14), (COS10*COS8_SQRT_2-COS22*COS24_SQRT_2),
-(COS6*COS24_SQRT_2-COS8_SQRT_2*COS26),-(COS30*COS8_SQRT_2+COS2*
COS24_SQRT_2),
(COS2*COS8_SQRT_2-COS24_SQRT_2*COS30),-(COS24_SQRT_2*COS26+COS8
_SQRT_2*COS6),
(COS10*COS24_SQRT_2+COS22*COS8_SQRT_2),-(COS18*COS8_SQRT_2-COS1
4*COS24_SQRT_2)},
{ ((COS12-COS20)<<S_BIT),-((COS4-COS28)<<S_BIT),
((COS4+COS28)<<S_BIT),-((COS12+COS20)<<S_BIT),
((COS12+COS20)<<S_BIT),-((COS4+COS28)<<S_BIT),
((COS4-COS28)<<S_BIT),-((COS12-COS20)<<S_BIT),-((COS12-COS20)<<S_BIT),
((COS4-COS28)<<S_BIT),-((COS4+COS28)<<S_BIT),
((COS12+COS20)<<S_BIT),-((COS12+COS20)<<S_BIT),
((COS4+COS28)<<S_BIT),-((COS4-COS28)<<S_BIT), ((COS12-COS20)<<S_BIT)},
{ ((COS14-COS18)<<S_BIT,-(COS10-COS22)<<S_BIT,
(COS6-COS26)<<S_BIT,-(COS2-COS30)<<S_BIT,
```

```
   (COS2+COS30)<<S_BIT,-(COS6+COS26)<<S_BIT,
   (COS10+COS22)<<S_BIT,-(COS14+COS18)<<S_BIT,
   (COS14+COS18)<<S_BIT,-(COS10+COS22)<<S_BIT,
   (COS6+COS26)<<S_BIT,-(COS2+COS30)<<S_BIT,
   (COS2-COS30)<<S_BIT,-(COS6-COS26)<<S_BIT, (COS10-COS22)<<S_BIT,
   -(COS14-COS18)<<S_BIT}
};
DCT_32x32[32][32] = {
  {COS16_SQRT_2<<S_BIT,COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S_BIT,
  COS16_SQRT_2<<S_BIT, COS16_SQRT_2<<S_BIT, COS16_SQRT_2<<S-BIT},
  {COS16_SQRT_2*COS17 + COS16_SQRT_2*COS15,
  COS13*COS16_SQRT_2 + COS19*COS16_SQRT_2, COS16_SQRT_2*COS21 +
  COS16_SQRT_2*COS11, COS16_SQRT_2*COS9 + COS16_SQRT_2*COS23,
  COS16_SQRT_2*COS25 + COS16_SQRT_2*COS7, COS16_SQRT_2*COS5 +
  COS16_SQRT_2*COS27, COS16_SQRT_2*COS29 + COS16_SQRT_2*COS3,
  COS1*COS16_SQRT_2 + COS31*COS16_SQRT_2, COS1*COS16_SQRT_2 -
  COS16_SQRT_2*COS31, COS16_SQRT_2*COS3 - COS29*COS16_SQRT_2,
  COS5*COS16_SQRT_2 - COS16_SQRT_2*COS27, COS16_SQRT-2*COS7 -
  COS25*COS16_SQRT_2, COS9*COS16_SQRT_2 - COS16_SQRT_2*COS23,
  COS16_SQRT_2*COS11 - COS21*COS16_SQRT_2, COS13*COS16_SQRT_2 -
  COS16_SQRT_2*COS19, COS16_SQRT_2*COS15 - COS17*COS16_SQRT_2,
  COS17*COS16_SQRT_2 - COS16_SQRT_2*COS15, COS16_SQRT_2*COS19 -
  COS13*COS16_SQRT_2, COS21*COS16_SQRT_2 - COS16_SQRT_2*COS11,
  COS16_SQRT_2*COS23 - COS9*COS16_SQRT_2, COS25*COS16_SQRT_2 -
  COS16_SQRT_2*COS7, COS16_SQRT_2*COS27 - COS5*COS16_SQRT_2,
  COS29*COS16_SQRT_2 - COS16_SQRT_2*COS3, COS16_SQRT_2*COS31 -
  COS1*COS16_SQRT_2, - COS1*COS16_SQRT_2 - COS31*COS16_SQRT_2, -
  COS16_SQRT_2*COS29 - COS16_SQRT_2*COS3, - COS16_SQRT_2*COS5 -
  COS16_SQRT_2*COS27, - COS16_SQRT_2*COS25 - COS16_SQRT_2*COS7, -
  COS16_SQRT_2*COS9 - COS16_SQRT_2*COS23, - COS16_SQRT_2*COS21 -
  COS16_SQRT_2*COS11, - COS13*COS16_SQRT_2 - COS19*COS16_SQRT_2, -
  COS16_SQRT_2*COS17 - COS16_SQRT_2*COS15},
  {(COS14+COS18)<<S_BIT, (COS10+COS22)<<S_BIT,
  (COS6+COS26)<<S_BIT, (COS2+COS30)<<S_BIT, (COS2-COS30)<<S_BIT,
  (COS6-COS26)<<S_BIT, (COS10-COS22)<<S_BIT, (COS14-COS18)<<S_BIT,
  -(COS14-COS18)<<S_BIT,-(COS10-COS22)<<S_BIT,-(COS6-COS26)<<S_BIT,-(COS
  2-COS30)<<S_BIT,-(COS2+COS30)<<S_BIT,-(COS6+COS26)<<S_BIT,-(COS10+CO
  S22)<<S_BIT,-(COS14+COS18)<<S_BIT,-(COS14+COS18)<<S_BIT,-(COS10+COS22
   )<<S_BIT,-(COS6+COS26)<<S_BIT,-(COS2+COS30)<<_BIT,-(COS2-COS30)<<S_BI
  T,-(COS6-COS26)<<S_BIT,-(COS10-COS22)<<S_BIT, -(COS14-COS18)<<S_BIT,
  (COS14-COS18)<<S_BIT, (COS10-COS22)<<S_BIT, (COS6-COS26)<<S_BIT,
  (COS2-COS30)<<S_BIT, (COS2+COS30)<<S_BIT, (COS6+COS26)<<S_BIT,
  (COS10+COS22)<<S_BIT, (COS14+COS18)<<S_BIT},
  {COS12_SQRT_2*COS15 + COS17*COS20_SQRT_2,
  COS13*COS4_SQRT_2 + COS19*COS28_SQRT_2, COS4_SQRT_2*COS11 -
  COS21 *COS28_SQRT_2, COS12_SQRT_2*COS9 - COS20_SQRT_2*COS23,
  COS20_SQRT_2*COS7 - COS12_SQRT_2*COS25, COS5*COS28_SQRT_2 -
  COS4_SQRT_2*COS27, - COS29*COS4_SQRT_2 - COS3*COS28_SQRT_2, -
  COS1*COS20_SQRT_2 - COS12_SQRT_2*COS31, COS31*COS20_SQRT_2 -
  COS1*COS12_SQRT_2, COS29*COS28_SQRT_2 - COS4_SQRT_2*COS3, -
  COS4_SQRT_2*COS5 - COS28_SQRT_2*COS27, - COS12_SQRT_2*COS7 -
  COS25*COS20_SQRT_2, - COS12_SQRT_2*COS23 - COS9*COS20_SQRT_2, -
  COS21*COS4_SQRT_2 - COS11*COS28_SQRT_2, COS13*COS28_SQRT_2 -
  COS4_SQRT_2*COS19, COS20_SQRT_2*COS15 - COS12_SQRT_2*COS17,
```

```
COS12_SQRT_2*COS17 - COS20_SQRT_2*COS15, COS4_SQRT_2*COS19 -
COS13*COS28_SQRT_2, COS21*COS4_SQRT_2 + COS11*COS28_SQRT_2,
COS12_SQRT_2*COS23 + COS9*COS20_SQRT_2, COS12_SQRT_2*COS7 +
COS25*COS20_SQRT_2, COS4_SQRT_2*COS5 + COS28_SQRT_2*COS27,
COS4_SQRT_2*COS3 - COS29*COS28_SQRT_2, COS1*COS12_SQRT_2 -
COS31*COS20_SQRT_2, COS1*COS20_SQRT_2 + COS12_SQRT_2*COS31,
COS29*COS4_SQRT_2 + COS3*COS28_SQRT_2, COS4_SQRT_2*COS27 -
COS5*COS28_SQRT_2, COS12_SQRT_2*COS25 - COS20_SQRT_2*COS7,
COS20_SQRT_2*COS23 - COS12_SQRT_2*COS9, COS21*COS28_SQRT_2 -
COS4_SQRT_2*COS11, - COS13*COS4_SQRT_2 - COS19*COS28_SQRT_2, -
COS12_SQRT_2*COS15 - COS17*COS20_SQRT_2},
{((COS12+COS20)<<S_BIT), ((COS4+COS28)<<S_BIT),
((COS4-COS28)<<S_BIT),
((COS12-COS20)<<S_BIT),-((COS12-COS20)<<S_BIT),-((COS4-COS28)<<S_BIT),-((
COS4+COS28)<<S_BIT),-((COS12+COS20)<<S_BIT),-((COS12+COS20)<<S_BIT),-((
COS4+COS28)<<S_BIT),-((COS4-COS28)<<S_BIT),-((COS 12-COS20)<<S_BIT),
((COS12-COS20)<<S_BIT), ((COS4-COS28)<<S_BIT), ((COS4+COS28)<<S_BIT),
((COS12+COS20)<<S_BIT), ((COS12+COS20)<<S_BIT), ((COS4+COS28)<<S_BIT),
((COS4-COS28)<<S_BIT),
((COS12-COS20)<<S_BIT),-((COS12-COS20)<<S_BIT),-((COS4-COS28)<<S_BIT),-((
COS4+COS28)<<S_BIT),-((COS12+COS20)<<S_BIT),-((COS12+COS20)<<S_BIT),-((
COS4+COS28)<<S_BIT),-((COS4-COS28)<<S_BIT),-((COS 12-COS20)<<S_BIT),
((COS12-COS20)<<S_BIT), ((COS4-COS28)<<S_BIT), ((COS4+COS28)<<S_BIT),
((COS12+COS20)<<S_BIT)},
{(COS17*COS4 - COS15*COS28) + (COS17*COS28 + COS4*COS15),
(COS12*COS13 + COS20*COS19) + (COS12*COS19 - COS13*COS20),
(COS12*COS21 + COS20*COS11) - (COS12*COS11 - COS21*COS20),
(COS4*COS23 + COS9*COS28) - (COS4*COS9 - COS28*COS23), (COS25*COS4 -
COS7*COS28) - (COS25*COS28 + COS4*COS7), (COS12*COS27 - COS5*COS20) -
(COS12*COS5 + COS20*COS27), - (COS12*COS29 + COS20*COS3) -
(COS12*COS3 - COS29*COS20), - (COS1*COS4 - COS31*COS28) - (COS1*COS28 +
COS4*COS31), (COS1 *COS28 + COS4*COS31) - (COS1*COS4 - COS31*COS28),
(COS12*COS29 + COS20*COS3) - (COS12*COS3 - COS29*COS20), (COS12*COS5
+ COS20*COS27) + (COS12*COS27 - COS5*COS20), (COS25*COS4 -
COS7*COS28) + (COS25*COS28 + COS4*COS7), (COS4*COS9 - COS28*COS23) +
(COS4*COS23 + COS9*COS28), (COS12*COS21 + COS20*COS11) +
(COS12*COS11 - COS21*COS20), (COS12*COS13 + COS20*COS19) -
(COS12*COS19 - COS13*COS20), (COS17*COS28 + COS4*COS15) - (COS17*COS4
- COS15*COS28), (COS17*COS4 - COS15*COS28) - (COS17*COS28 +
COS4*COS15), (COS12*COS19 - COS13*COS20) - (COS12*COS13 +
COS20*COS19), - (COS12*COS21 + COS20*COS11) - (COS12*COS11 -
COS21*COS20), - (COS4*COS9 - COS28*COS23) - (COS4*COS23 + COS9*COS28),
- (COS25*COS4 - COS7*COS28) - (COS25*COS28 + COS4*COS7), - (COS12*COS5
+ COS20*COS27) - (COS12*COS27 - COS5*COS20), (COS12*COS3 -
COS29*COS20) - (COS12*COS29 + COS20*COS3), (COS1*COS4 - COS31*COS28) -
(COS1 *COS28 + COS4*COS31), (COS1*COS4 - COS31*COS28) + (COS1 *COS28 +
COS4*COS31), (COS12*COS29 + COS20*COS3) + (COS12*COS3 - COS29*COS20),
(COS12*COS5 + COS20*COS27) - (COS12*COS27 - COS5*COS20), (COS25*COS28
+ COS4*COS7) - (COS25*COS4 - COS7*COS28), (COS4*COS9 - COS28*COS23) -
(COS4*COS23 + COS9*COS28), (COS12*COS11 - COS21*COS20) - (COS12*COS21
+ COS20*COS11), - (COS12*COS13 + COS20*COS19) - (COS12*COS19 -
COS13*COS20), - (COS17*COS4 - COS15*COS28) - (COS17*COS28 +
COS4*COS15)},
{(COS24_SQRT_2*COS18+COS8_SQRT_2*COS14),
(COS10*COS8_SQRT_2-COS22*COS24_SQRT_2),
(COS6*COS24_SQRT_2-COS8_SQRT_2*COS26),-(COS30*COS8_SQRT_2+COS2*
COS24_SQRT_2),-(COS2*COS8_SQRT_2-COS24_SQRT_2*COS30),-(COS24_SQR
T_2*COS26+COS8_SQRT_2*COS6),-(COS10*COS24_SQRT_2+COS22*COS8_SQR
T_2),-(COS18*COS8_SQRT_2-COS14*COS24_SQRT_2),
(COS18*COS8_SQRT_2-COS14*COS24_SQRT_2),
(COS10*COS24_SQRT_2+COS22*COS8_SQRT_2),
(COS24_SQRT_2*COS26+COS8_SQRT_2*COS6),
(COS2*COS8_SQRT_2-COS24_SQRT_2*COS30),
```

```
(COS30*COS8_SQRT_2+COS2*COS24_SQRT_2),
-(COS6*COS24_SQRT_2-COS8_SQRT_2*COS26),-(COS10*COS8_SQRT_2-COS22*
COS24_SQRT_2),-(COS24_SQRT_2*COS18+COS8_SQRT_2*COS14),-(COS24_SQ
RT_2*COS18+COS8_SQRT_2*COS14),-(COS10*COS8_SQRT_2-COS22*COS24_S
QRT_2), -(COS6*COS24_SQRT_2-COS8_SQRT_2*COS26),
(COS30*COS8_SQRT_2+COS2*COS24_SQRT_2),
(COS2*COS8_SQRT_2-COS24_SQRT_2*COS30),
(COS24_SQRT_2*COS26+COS8_SQRT_2*COS6),
(COS10*COS24_SQRT_2+COS22*COS8_SQRT_2),
(COS18*COS8_SQRT_2-COS24*COS24_SQRT_2),-(COS18*COS8_SQRT_2-COS14
*COS24_SQRT_2),-(COS10*COS24_SQRT_2+COS22*COS8_SQRT_2),-(COS24_SQ
RT_2*COS26+COS8_SQRT_2*COS6),-(COS2*COS8_SQRT_2-COS24_SQRT_2*CO
S30),-(COS30*COS8_SQRT_2+COS2*COS24_SQRT_2),
(COS6*COS24_SQRT_2-COS8_SQRT_2*COS26),
(COS10*COS8_SQRT_2-COS22*COS24_SQRT_2),
(COS24_SQRT_2*COS18+COS8_SQRT_2*COS14)},
{COS17*COS24_SQRT_2 + COS8_SQRT_2*COS15, COS13*COS8_SQRT_2
- COS19*COS24_SQRT_2 , COS11*COS24_SQRT_2 - COS21*COS8_SQRT_2, -
COS8_SQRT_2*COS23 - COS9*COS24_SQRT_2, - COS25*COS24_SQRT_2 -
COS8_SQRT_2*COS7, COS27*COS24_SQRT_2 - COS5*COS8_SQRT_2,
COS29*COS8_SQRT_2 - COS3*COS24_SQRT_2, COS1*COS24_SQRT_2 +
COS8_SQRT_2*COS31, COS1*COS8_SQRT_2 - COS31*COS24_SQRT_2,
COS29*COS24_SQRT_2 + COS8_SQRT_2*COS3, COS5*COS24_SQRT_2 +
COS8_SQRT_2*COS27, COS25*COS8_SQRT_2 - COS7*COS24_SQRT_2,
COS24_SQRT_2*COS23 - COS8_SQRT_2*COS9, - COS21*COS24_SQRT_2 -
COS8_SQRT_2*COS11, - COS13*COS24_SQRT_2 - COS8_SQRT_2*COS19,
COS15*COS24_SQRT_2 - COS17*COS8_SQRT_2, COS17*COS8_SQRT_2 -
COS15*COS24_SQRT_2, COS13*COS24_SQRT_2 + COS8_SQRT_2*COS19,
COS21*COS24_SQRT_2 + COS8_SQRT_2*COS11, COS8_SQRT_2*COS9 -
COS24_SQRT_2*COS23, COS7*COS24_SQRT_2 - COS25*COS8_SQRT_2, -
COS5*COS24_SQRT_2 - COS8_SQRT_2*COS27, - COS29*COS24_SQRT_2 -
COS8_SQRT_2*COS3, COS31*COS24_SQRT_2 - COS1*COS8_SQRT_2, -
COS1*COS24_SQRT_2 - COS8_SQRT_2*COS31, COS3*COS24_SQRT_2 -
COS29*COS8_SQRT_2, COS5*COS8_SQRT_2 - COS27*COS24_SQRT_2,
COS25*COS24_SQRT_2 + COS8_SQRT_2*COS7, COS8_SQRT_2*COS23 +
COS9*COS24_SQRT_2, COS21*COS8_SQRT_2 - COS11*COS24_SQRT_2,
COS19*COS24_SQRT_2 - COS13*COS8_SQRT_2, - COS17*COS24_SQRT_2 -
COS8_SORT_2*COS15},
{COS8_SQRT_2<<S_BIT,
COS24_SQRT_2<<S_BIT,-COS24_SQRT_2<<S_BIT,-COS8_SQRT_2<<S_BIT,-COS
8_SQRT_2<<S_BIT,-COS24_SQRT_2<<S_BIT, COS24_SQRT_2<<S_BIT,
COS8_SQRT_2<<S_BIT, COS8_SQRT_2<<S_BIT,
COS24_SQRT_2<<S_BIT,-COS24_SQRT_2<<S_BIT,-COS8_SQRT_2<<S_BIT,-COS
8_SQRT_2<<S_BIT,-COS24_SQRT_2<<S_BIT, COS24_SQRT_2<<S_BIT,
COS8_SQRT_2<<S_BIT, COS8_SQRT_2<<S_BIT,
COS24_SQRT_2<<S_BIT,-COS24_SQRT_2<<S_BIT,-COS8_SQRT_2<<S_BIT,-COS
8_SQRT_2<<S_BIT,-COS24_SQRT_2<<S_BIT, COS24_SQRT_2<<S_BIT,
COS8_SQRT_2<<S_BIT, COS8_SQRT_2<<S_BIT,
COS24_SQRT_2<<S_BIT,-COS24_SQRT_2<<S_BIT,-COS8_SQRT_2<<S_BIT,-COS
8_SQRT_2<<S_BIT,-COS24_SQRT_2<<S_BIT, COS24_SQRT_2<<S_BIT,
COSB_SQRT_2<<S_BIT},
{COS17*COS8_SQRT_2 + COS15*COS24_SQRT_2, COS8_SQ RT_2*COS19
- COS13*COS24_SQRT_2, COS21 *COS24_SQRT_2 - COS8_SQRT_2*COS11, -
COS8_SQRT_2*COS9 - COS24_SQRT_2*COS23, - COS25*COS8_SQRT_2 -
COS7*COS24_SQRT_2, COS5*COS24_SQRT_2 - COS8_SQRT_2*COS27,
COS8_SQRT_2*COS3 - COS29*COS24_SQRT_2, COS1*COS8_SQRT_2 +
COS31 *COS24_SQRT_2, COS1*COS24_SQRT_2 - COS8_SQ RT_2*COS31, -
COS29*COS8_SQRT_2 - COS3*COS24_SQRT_2, - COS5*COS8_SQRT_2 -
COS27*COS24_SQRT_2, COS25*COS24_SQRT_2 - COS8_SQRT_2*COS7,
COS8_SQRT_2*COS23 - COS9*COS24_SQRT_2, COS21*COS8_SQRT_2 +
COS11*COS24_SQRT_2, COS13*COS8_SQRT_2 + COS19*COS24_SQRT_2,
COS8_SQRT_2*COS15 - COS17*_COS24_SQRT_2, COS17*COS24_SQRT_2 -
COS8_SQRT_2*COS15, - COS13*COS8_SQRT_2 - COS19*COS24_SQRT_2, -
```

COS21*COS8_SQRT_2 - COS11*COS24_SQRT_2, COS9*COS24_SQRT_2 - COS8_SQRT_2*COS23, COS8_SQRT_2*COS7 - COS25*COS24_SQRT_2, COS5*COS8_SQRT_2 + COS27*COS24_SQRT_2, COS29*COS8_SQRT_2 + COS3*COS24_SQRT_2, COS8_SQRT_2*COS31 - COS1*COS24_SQRT_2, - COS1*COS8_SQRT_2 - COS31 *COS24_SQRT_2, COS29*COS24_SQRT_2 - COS8_SQRT_2*COS3, COS8_SQRT_2*COS27 - COS5*COS24_SQRT_2, COS25*COS8_SQRT_2 + COS7*COS24_SQRT_2, COS8_SQRT_2*COS9 + COS24_SQRT_2*COS23, COS8_SQRT_2*COS11 - COS21*COS24_SQRT_2, COS13*COS24_SQRT_2 - COS8_SQRT_2*COS19, - COS17*COS8_SQRT_2 - COS15*COS24_SQRT_2},

{(COS24_SQRT_2*COS14+COS8_SQRT_2*COS18), (COS8_SQRT_2*COS22-COS24_SQRT_2*COS10),-(COS8_SQRT_2*COS6-COS24_ SQRT_2*COS26),-(COS24_SQRT_2*COS30+COS8_SQRT_2*COS2),-(COS24_SQR T_2*COS2-COS8_SQRT_2*COS30), (COS24_SQRT_2*COS6+COS8_SQRT_2*COS26), (COS22*COS24_SQRT_2+COS8_SQT_2*COS10), (-COS24_SQRT_2*COS18+COS8_SQRT_2*COS14),-(-COS24_SQRT_2*COS18+CO S8_SQRT_2*COS14),-(COS22*COS24_SQRT_2+COS8_SQRT_2*COS10),-(COS24_ SQRT_2*COS6+COS8_SQRT_2*COS26), (COS24_SQRT_2*COS2-COS8_SQRT_2*COS30), (COS24_SQRT_2*COS30+COS8_SQRT_2*COS2), (COS8_SQRT_2*COS6-COS24_SQRT_2*COS26), -(COS8_SQRT_2*COS22-COS24_SQRT_2*COS10),-(COS24_SQRT_2*COS14+COS 8_SQRT_2*COS18),-(COS24_SQRT_2*COS14+COS8_SQRT_2*COS18), -(COS8_SQRT_2*COS22-COS24_SQRT_2*COS10), (COS8_SQRT_2*COS6-COS24_SQRT_2*COS26), (COS24_SQRT_2*COS30+COS8_SQRT_2*COS2), (COS24_SQRT_2*COS2-COS8_SQRT_2*COS30),-(COS24_SQRT_2*COS6+COS8_ SQRT_2*COS26),-(COS22*COS24_SQRT_2+COS8_SQRT_2*COS10),-(-COS24_SQ RT_2*COS18+COS8_SQRT_2*COS14), (-COS24_SQRT_2*COS18+COS8_SQRT_2*COS14), (COS22*COS24_SQRT_2+COS8_SQRT_2*COS10), (COS24_SQRT_2*COS6+COS8_SQRT_2*COS26),-(COS24_SQRT_2*COS2-COS8_ SQRT_2*COS30),-(COS24_SQRT_2*COS30+COS8_SQRT_2*COS2),-(COS8_SQRT _2*COS6-COS24_SQRT_2*COS26), (COS8_SQRT_2*COS22-COS24_SQRT_2*COS10), (COS24_SQRT_2*COS14+COS8_SQRT_2*COS18)},

{COS17*COS28_SQRT_2 + COS4_SQRT_2*COS15, COS13*COS20_SQRT_2 - COS12_SQRT_2*COS19, - COS12_SQRT_2*COS21 - COS20_SQRT_2*COS11, COS28_SQRT_2*COS23 - COS4_SQRT_2*COS9, COS25*COS4_SQRT_2 - COS7*COS28_SQRT_2, COS12_SQRT_2*COS5 + COS20_SQRT_2*COS27, COS12_SQRT_2*COS3 - COS29*COS20_SQRT_2, - COS1*COS28_SQRT_2 - COS4_SQRT_2*COS31, COS31 *COS28_SQRT_2 - COS1*COS4_SQRT_2, - COS12_SQRT_2*COS29 - COS20_SQRT_2*COS3, COS5*COS20_SQRT_2 - COS12_SQRT_2*COS27, COS25*COS28_SQRT_2 + COS4_SQRT_2*COS7, COS4_SQRT_2*COS23 + COS9*COS28_SQRT_2, COS21 *COS20_SQRT_2 - COS12_SQRT_2*COS11, - COS12_SQRT_2*COS13 - COS20_SQRT_2*COS19, COS15*COS28_SQRT_2 - COS17*COS4_SQRT_2, COS17*COS4_SQRT_2 - COS15*COS28_SQRT_2, COS12_SQRT_2*COS13 + COS20_SQRT_2*COS19, COS12_SQRT_2*COS11 - COS21 *COS20_S0QRT_2, - COS4_SQRT_2*COS23 - COS9*COS28_SQRT_2, - COS25*COS28_SQRT_2 - COS4_SQRT_2*COS7, COS12_SQRT_2*COS27 - COS5*COS20_SQRT_2, COS12_SQRT_2*COS29 + COS20_SQRT_2*COS3, COS1 *COS4_SQRT_2 - COS31 *COS28_SQRT_2, COS1*COS28_SQRT_2 + COS4_SQRT_2*COS31, COS29*COS20_SQRT_2 - COS12_SQRT_2*COS3, - COS12_SQRT_2*COS5 - COS20_SQRT_2*COS27, COS7*COS28_SQRT_2 - COS25*COS4_SQRT_2, COS4_SQRT_2*COS9 - COS28_SQRT_2*COS23, COS12_SQRT_2*COS21 + COS20_SQRT_2*COS11, COS12_SQRT_2*COS19 - COS13*COS20_SQRT_2, - COS17*COS28_SQRT_2 - COS4_SQRT_2*COS15},

{COS12*SQRT_2,-COS28*SQRT_2,-COS4*SQRT_2,-COS20*SQRT_2, COS20*SQRT_2, COS4*SQRT_2, COS28*SQRT_2,-COS12*SQRT_2,-COS12*SQRT_2, COS28*SQRT_2, COS4*SQRT_2,

```
COS20*SQRT_2,-COS20*SQRT_2,-COS4*SQRT_2,-COS28*SQRT_2,
COS12*SQRT_2,
COS12*SQRT_2,-COS28*SQRT_2,-COS4*SQRT_2,-COS20*SQRT_2,
COS20*SQRT_2, COS4*SQRT_2,
COS28*SQRT_2,-COS12*SQRT_2,-COS12*SQRT_2, COS28*SQRT_2,
COS4*SQRT_2,
COS20*SQRT_2,-COS20*SQRT_2,-COS4*SQRT_2,-COS28*SQRT_2,
COS12*SQRT_2},
{((COS12-COS20)*COS15+(COS12+COS20)*COS17),-((COS28-COS4)*COS19
+(COS4+COS28)*COS13),-((COS4+COS28)*COS11-(COS28-COS4)*COS21),-(-(COS
12-COS20)*COS9+(COS12+COS20)*COS23),
(-(COS12-COS20)*COS25+(COS12+COS20)*COS7),
(-(COS28-COS4)*COS5+(COS4+COS28)*COS27),-(-(COS28-COS4)*COS3-(COS4+C
OS28)*COS29),-((COS12-COS20)*COS31 +(COS12+COS20)*COS1),-((COS12-COS2
0)*COS1-(COS12+COS20)*COS31),
(-(COS28-COS4)*COS29+(COS4+COS28)*COS3),
((COS28-COS4)*COS27+(COS4+COS28)*COS5),-((COS12-COS20)*COS7+(COS12+
COS20)*COS25),-((COS12-COS20)*COS23+(COS12+COS20)*COS9),
-(-(COS28-COS4)*COS11-(COS4+COS28)*COS21),
(-(COS28-COS4)*COS13+(COS4+COS28)*COS19),
(-(COS12-COS20)*COS17+(COS12+COS20)*COS15),-(-(COS12-COS20)*COS17+(C
OS12+COS20)*COS15),-(-(COS28-COS4)*COS13+(COS4+COS28)*COS19),
(-(COS28-COS4)*COS11-(COS4+COS28)*COS21),
((COS12-COS20)*COS23+(COS12+COS20)*COS9),
((COS12-COS20)*COS7+(COS12+COS20)*COS25),-((COS28-COS4)*COS27+(COS4
+COS28)*COS5),-(-(COS28-COS4)*COS29+(COS4+COS28)*COS3),
((COS12-COS20)*COS1-(COS12+COS20)*COS31),
((COS12-COS20)*COS31 +(COS12+COS20)*COS1),
(-(COS28-COS4)*COS3-(COS4+COS28)*COS29),-(-(COS28-COS4)*COS5+(COS4+C
OS28)*COS27),-(-(COS12-COS20)*COS25+(COS12+COS20)*COS7),
(-(COS12-COS20)*COS9+(COS12+COS20)*COS23),
((COS4+COS28)*COS11-(COS28-COS4)*COS21),
((COS28-COS4)*COS19+(COS4+COS28)*COS13),-((COS12-COS20)*COS15+(COS1
2+COS20)*COS17)},
{COS14*SQRT2,-COS22*SQRT_2,-COS6*SQRT_2, COS30*SQRT_2,
COS2*SQRT_2, COS26*SQRT_2,-COS10*SQRT_2,-COS18*SQRT_2,
COS18*SQRT_2, COS10*SQRT_2,-COS26*SQRT_2,-COS2*SQRT_2,
-COS30*SQRT_2, COS6*SQRT_2,
COS22*SQRT_2,-COS14*SQRT_2,-COS14*SQRT_2, COS22*SQRT_2,
COS6*SQRT_2, -COS30*SQRT_2,-COS2*SQRT_2,-COS26*SQRT_2,
COS10*SQRT_2, COS18*SQRT_2,-COS18*SQRT_2,-COS10*SQRT_2,
COS26*SQRT_2, COS2*SQRT_2,
COS30*SQRT_2,-COS6*SQRT_2,-COS22*SQRT_2, COS14*SQRT_2},
{SQRT_2*COS15, -SQRT_2*COS19, -SQRT_2*COS11, SQRT_2*COS23,
SQRT_2*COS7, -SQRT_2*COS27, -SQRT_2*COS3, SQRT_2*COS31,
SQRT_2*COS1, SQRT_2*COS29, -SQRT_2*COS5, -SQRT_2*COS25,
SQRT_2*COS9, SQRT_2*COS21, -SQRT_2*COS13, -SQRT_2*COS17,
SQRT_2*COS17, SQRT_2*COS13, -SQRT_2*COS21, -SQRT_2*COS9,
SQRT_2*COS25, SQRT_2*COS5, -SQRT_2*COS29, -SQRT_2*COS1,
-SQRT_2*COS31, SQRT_2*COS3, SQRT_2*COS27, -SQRT_2*COS7,
-SQRT_2*COS23, SQRT_2*COS11, SQRT_2*COS19, -SQRT_2*COS15},
{COS16_SQRT_2<<S_BIT,-COS16 _SQRT_2<<S_BIT,-COS16_SQRT_2<<S_
BIT, COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT,
```

```
COS16_SQRT_2<<S_BIT,-COS16_SQRT_2<<S_BIT,-COS16_SQRT_2<<S_BIT,
COS16_SQRT_2<<S_BIT,
COS16_SQRT_2<<S_BIT,-COS16_SQRT_2<<S_BIT,-COS16_SQRT_2<<S_BIT,
COS16_SQRT_2<<S_BIT},
{SQRT_2*COS17, -SQRT_2*COS13, -SQRT_2*COS21, SQRT_2*COS9,
SQRT_2*COS25, -SQRT_2*COS5, -SQRT_2*COS29, SQRT_2*COS1,
-SQRT_2*COS31, -SQRT_2*COS3, SQRT_2*COS27, SQRT_2*COS7,
-SQRT_2*COS23, -SQRT_2*COS11, SQRT_2*COS19, SQRT_2*COS15,
-SQRT_2*COS15, -SQRT_2*COS19, SQRT_2*COS11, SQRT_2*COS23,
-SQRT_2*COS7, -SQRT_2*COS27, SQRT_2*COS3, SQRT_2*COS31,
-SQRT_2*COS1, SQRT_2*COS29, SQRT_2*COS5, -SQRT_2*COS25,
-SQRT_2*COS9, SQRT_2*COS21, SQRT_2*COS13, -SQRT_2*COS17},
{COS18*SQRT_2,-COS10*SQRT_2,-COS26*SQRT_2, COS2*SQRT_2,
-COS30*SQRT_2,-COS6*SQRT_2, COS22*SQRT_2,
COS14*SQRT_2,-COS14*SQRT_2,-COS22*SQRT_2, COS6*SQRT_2,
COS30*SQRT_2_,-COS2*SQRT_2, COS26*SQRT_2,
COS10*SQRT_2,-COS18*SQRT_2,-COS18*SQRT_2, COS10*SQRT_2,
COS26*SQRT_2,-COS2*SQRT_2, COS30*SQRT_2,
COS6*SQRT_2,-COS22*SQRT_2,-COS14*SQRT_2, COS14*SQRT_2,
COS22*SQRT_2,-COS6*SQRT_2, -COS30*SQRT_2,
COS2*SQRT_2,-COS26*SQRT_2,-COS10*SQRT_2, COS18*SQRT_2},
{(-(COS12-COS20)*COS17+(COS12+COS20)*COS15),-(-(COS28-COS4)*COS
13+(COS4+COS28)*COS19), -(-(COS28-COS4)*COS11-(COS4+COS28)*COS21),
((COS12-COS20)*COS23+(COS12+COS20)*COS9),-((COS12-COS20)*COS7+(COS1
2+COS20)*COS25),-((COS28-COS4)*COS27+(COS4+COS28)*COS5),
(-(COS28-COS4)*COS29+(COS4+COS28)*COS3),
((COS12-COS20)*COS1-(COS12+COS20)*COS31),-((COS12-COS20)*COS31 +(COS
12+COS20)*COS1), (-(COS28-COS4)*COS3-(COS4+COS28)*COS29),
(-(COS28-COS4)*COS5+(COS4+COS28)*COS27),-(-(COS12-COS20)*COS25+(COS1
2+COS20)*COS7),-(-(COS12-COS20)*COS9+(COS12+COS20)*COS23),
((COS4+COS28)*COS11-(COS28-COS4)*COS21),-((COS28-COS4)*COS19+(COS4+
COS28)*COS13),-((COS12-COS20)*COS15+(COS12+COS20)*COS17),
((COS12-COS20)*COS15+(COS12+COS20)*COS17),
((COS28-COS4)*COS19+(COS4+COS28)*COS13),-((COS4+COS28)*COS11-(COS28
-COS4)*COS21), (-(COS12-COS20)*COS9+(COS12+COS20)*COS23),
(-(COS12-COS20)*COS25+(COS12+COS20)*COS7),-(-(COS28-COS4)*COS5+(COS4
+COS28)*COS27),-(-(COS28-COS4)*COS3-(COS4+COS28)*COS29),
((COS12-COS20)*COS31+(COS12+COS20)*COS1),-((COS12-COS20)*COS1-(COS1
2+COS20)*COS31),-(-(COS28-COS4)*COS29+(COS4+COS28)*COS3),
((COS28-COS4)*COS27+(COS4+COS28)*COS5),
((COS12-COS20)*COS7+(COS12+COS20)*COS25),-((COS12-COS20)*COS23+(COS
12+COS20)*COS9), (-(COS28-COS4)*COS11-(COS4+COS28)*COS21),
(-(COS28-COS4)*COS13+(COS4+COS28)*COS19),-(-(COS12-COS20)*COS17+(COS
12+COS20)*COS15)},
{COS20*SQRT_2,-COS4*SQRT_2, COS28*SQRT_2,
COS12*SQRT_2,-COS12*SQRT_2,-COS28*SQRT_2,
COS4*SQRT_2,-COS20*SQRT_2,-COS20*SQRT_2,
COS4*SQRT_2,-COS28*SQRT_2,-COS12*SQRT_2, COS12*SQRT_2,
COS28*SQRT_2,-COS4*SQRT_2, COS20*SQRT_2,
COS20*SQRT_2,-COS4*SQRT_2, COS28*SQRT_2,
COS12*SQRT_2,-COS12*SQRT_2,-COS28*SQRT_2,
COS4*SQRT_2,-COS20*SQRT_2,-COS20*SQRT_2,
COS4*SQRT_2,-COS28*SQRT_2,-COS12*SQRT_2, COS12*SQRT_2,
COS28*SQRT_2,-COS4*SQRT_2, COS20*SQRT_2},
{COS17*COS4_SQRT_2 - COS15*COS28_SQRT_2, -
COS12_SQRT_2*COS13 - COS20_SQRT_2*COS19, COS12_SQRT_2*COS11 -
COS21 *COS20_SQRT_2, COS4_SQRT_2*COS23 + COS9*COS28_SQRT_2, -
COS25*COS28_SQRT_2 - COS4_SQRT_2*COS7, COS5*COS20_SQRT_2 -
COS12_SQRT_2*COS27, COS12_SQRT_2*COS29 + COS20_SQRT_2*COS3,
COS31*COS28_SQRT_2 - COS1 *COS4_SQRT_2, COS1 *COS28_SQRT_2 +
COS4_SQRT_2*COS31, COS12_SQRT_2*COS3 - COS29*COS20_SQRT_2, -
COS12_SQRT_2*COS5 - COS20_SQRT_2*COS27, COS25*COS4_SQRT_2 -
COS7*COS28_SQRT_2, COS4_SQRT_2*COS9 - COS28_SQRT_2*COS23, -
```

COS12_SQRT_2*COS21 - COS20_SQRT_2*COS11, COS12_SQRT_2*COS19 -
COS13*COS20_SQRT_2, COS17*COS28_SQRT_2 + COS4_SQRT_2*COS15, -
COS17*COS28_SQRT_2 - COS4_SQRT_2*COS15, COS13*COS20_SQRT_2 -
COS12_SQRT_2*COS19, COS12_SQRT_2*COS21 + COS20_SQRT_2*COS11,
COS28_SQRT_2*COS23 - COS4_SQRT_2*COS9, COS7*COS28_SQRT_2 -
COS25*COS4_SQRT_2, COS12_SQRT_2*COS5 + COS20_SQRT_2*COS27,
COS29*COS20_SQRT_2 - COS12_SQRT_2*COS3, - COS1*COS28_SQRT_2 -
COS4_SQRT_2*COS31, COS1*COS4_SQRT_2 - COS31*COS28_SQRT_2, -
COS12_SQRT_2*COS29 - COS20_SQRT_2*COS3, COS12_SQRT_2*COS27 -
COS5*COS20_SQRT_2, COS25*COS28_SQRT_2 + COS4_SQRT_2*COS7, -
COS4_SQRT_2*COS23 - COS9*COS28_SQRT_2, COS21_*COS20_SQRT_2 -
COS12_SQRT_2*COS11, COS12_SQRT_2*COS13 + COS20_SQRT_2*COS19,
COS15*COS28_SQRT_2 - COS17*COS4_SQRT_2},
{(-COS24 _SQRT_2*COS18+COS8_SQRT_2*COS14),-(COS22*COS24_SQRT
_2+COS8_SQRT_2*COS10), (COS24_SQRT_2*COS6+COS8_SQRT_2*COS26),
(COS24_SQRT_2*COS2-COS8_SQRT_2*COS30),-(COS24_SQRT_2*COS30+COS8
_SQRT_2*COS2), (COS8_SQRT_2*COS6-COS24_SQRT_2*COS26),
(COS8_SQRT_2*COS22-COS24_SQRT_2*COS10),-(COS24_SQRT_2*COS14+COS
8_SQRT_2*COS18), (COS24_SQRT_2*COS14+COS8_SQRT_2*COS18),
-(COS8_SQRT_2*COS22-COS24_SQRT_2*COS10),-(COS8_SQRT_2*COS6-COS24
_SQRT_2*COS26),
(COS24_SQRT_2*COS30+COS8_SQRT_2*COS2),-(COS24_SQRT_2*COS2-COS8_
SQRT_2*COS30),-(COS24_SQRT_2*COS6+COS8_SQRT_2*COS26),
(COS22*COS24_SQRT_2+COS8_SQRT_2*COS10),-(-COS24_SQRT_2*COS18+CO
S8_SQRT_2*COS14),-(-COS24_SQRT_2*COS18+COS8_SQRT_2*COS14),
(COS22*COS24_SQRT_2+COS8_SQRT_2*COS10),-(COS24_SQRT_2*COS6+COS8
SQRT_2*COS26),-(COS24_SQRT_2*COS2-COS8_SQRT_2*COS30),
(COS24_SQRT_2*COS30+COS8_SQRT_2*COS2),-(COS8_SQRT_2*COS6-COS24_
SQRT_2*COS26), -(COS8_SQRT_2*COS22-COS24_SQRT_2*COS10),
(COS24_SQRT_2*COS14+COS8_SQRT_2*COS18),-(COS24_SQRT_2*COS14+COS
8_SQRT_2*COS18), (COS8_SQRT_2*COS22-COS24_SQRT_2*COS10),
(COS8_SQRT_2*COS6-COS24_SQRT_2*COS26),-(COS24_SQRT_2*COS30+COS8
_SQRT_2*COS2), (COS24_SQRT_2*COS2-COS8_SQRT_2*COS30),
(COS24_SQRT_2*COS6+COS8_SQRT_2*COS26),-(COS22*COS24_SQRT_2+COS8
_SQRT_2*COS10), (-COS24_SQRT_2*COS18+COS8_SQRT_2*COS14)},
{COS8_SQRT_2*COS15 - COS17*COS24_SQRT_2, - COS13*COS8_SQRT_2
- COS19*COS24_SQRT_2, COS21*COS8_SQRT_2 + COS11*COS24_SQRT_2 ,
COS9*COS24_SQRT_2 - COS8_SQRT_2*COS23, COS25*COS24_SQRT_2 -
COS8_SQRT_2*COS7, COS5*COS8_SQRT_2 + COS27*COS24_SQRT_2, -
COS29*COS8_SQRT_2 - COS3*COS24_SQRT_2, COS8_SQRT_2*COS31 -
COS1*COS24_SQRT_2, COS1*COS8_SQRT_2 + COS31*COS24_SQRT_2,
COS29*COS24_SQRT_2 - COS8_SQRT_2*COS3, COS5*COS24_SQRT_2 -
COS8_SQRT_2*COS27, COS25*COS8_SQRT_2 + COS7*COS24_SQRT_2, -
COS8_SQRT_2*COS9 - COS24_SQRT_2*COS23, COS8_SQRT_2*COS11 -
COS21*COS24_SQRT_2, COS8_SQRT_2*COS19 - COS13*COS24_SQRT_2, -
COS17*COS8_SQRT_2 - COS15*COS24_SQRT_2, COS17*COS8_SQRT_2 +
COS15*COS24_SQRT_2, COS13*COS24_SQRT_2 - COS8_SQRT_2*COS19,
COS21*COS24_SQRT_2 - COS8_SQRT_2*COS11, COS8_SQRT_2*COS9 +
COS24_SQRT_2*COS23, - COS25*COS8_SQRT_2 - COS7*COS24_SQRT_2,
COS8_SQRT_2*COS27 - COS5*COS24_SQRT_2, COS8_SQRT_2*COS3 -
COS29*COS24_SQRT_2, - COS1*COS8_SQRT_2 - COS31 *COS24_SQRT_2,
COS1*COS24_SQRT_2 - COS8_SQRT_2*COS31, COS29*COS8_SQRT_2 +
COS3*COS24_SQRT_2, - COS5*COS8_SQRT_2 - COS27*COS24_SQRT_2,
COS8_SQRT_2*COS7 - COS25*COS24_SQRT_2, COS8_SQRT_2*COS23 -
COS9*COS24_SQRT_2, - COS21*COS8_SQRT_2 - COS11*COS24_SQRT_2,
COS13*COS8_SQRT_2 + COS19*COS24_SQRT_2, COS17*COS24_SQRT_2 -
COS8_SQRT_2*COS15},
{COS24_SQRT_2<<S_BIT,-COS8_SQRT_2<<S_BIT,
COS8_SQRT_2<<S_BIT,-COS24_SQRT_2<<S_BIT,-COS24_SQRT_2<<S_BIT,
COS8_SQRT_2<<S_BIT_,-COS8_SQRT_2<<S_BIT, COS24_SQRT_2<<S_BIT,
COS24_SQRT_2_S_BIT,-COS8_SQRT_2_S_BIT,
COS8_SQRT_2<<S_BIT,-COS24_SQRT_2<<S_BIT,-COS24_SQRT_2<<S_BIT,
COS8_SQRT_2<<S_BIT,-COS8_SQRT_2<<S_BIT, COS24_SQRT_2<<S_BIT,

COS24_SQRT_2_S_BIT,-COS8_SQRT_2_S_BIT,
COS8_SQRT_2<<S_BIT,-COS24_SQRT_2<<S_BIT,-COS24_SQRT_2<<S_BIT,
COSB_SQRT_2«<<S_BIT,-COS8_SQRT_2<<S_BIT, COS24_SQRT_2<<S_BIT,
COS24_SQRT_2<<S_BIT,-COS8_SQRT_2<<S_BIT,
COS8_SQRT_2<<S_BIT,-COS24_SQRT_2<<S_BIT,-COS24_SQRT_2<<S_BIT,
COS8_SQRT_2<<S_BIT,-COS8_SQRT_2<<S_BIT, COS24_SQRT_2<<S_BIT},
{COS17*COS8_SQRT_2 - COS15*COS24_SQRT_2, -
COS13*COS24_SQRT_2 - COS8_SQRT_2*COS19, COS21*COS24_SQRT_2 +
COS8_SQRT_2*COS11, COS24_SQRT_2*COS23 - COS8_SQRT_2*COS9,
COS7*COS24_SQRT_2 - COS25*COS8_SQRT_2, COS5*COS24_SQRT_2 +
COS8_SQRT_2*COS27, - COS29*COS24_SQRT_2 - COS8_SQRT_2*COS3,
COS1*COS8_SQRT_2 - COS31*COS24_SQRT_2, - COS1*COS24_SQRT_2 -
COS8_SQRT_2*COS31, COS29*COS8_SQRT_2 - COS3*COS24_SQRT_2,
COS5*COS8_SQRT_2 - COS27*COS24_SQRT_2, - COS25*COS24_SQRT_2 -
COS8_SQRT_2*COS7, COS8_SQRT_2*COS23 + COS9*COS24_SQRT_2,
COS11*COS24_SQRT_2 - COS21*COS8_SQRT_2, COS19*COS24_SQRT_2 -
COS13*COS8_SQRT_2, COS17*COS24_SQRT_2 + COS8_SQRT_2*COS15, -
COS17*COS24_SQRT_2 - COS8_SQRT_2*COS15, COS13*COS8_SQRT_2 -
COS19*COS24_SQRT_2, COS21*COS8_SQRT_2 - COS11*COS24_SQRT_2, -
COS8_SQRT_2*COS23 - COS9*COS24_SQRT_2, COS25*COS24_SQRT_2 +
COS8_SQRT_2*COS7, COS27*COS24_SQRT_2 - COS5*COS8_SQRT_2,
COS3*COS24_SQRT_2 - COS29*COS8_SQRT_2, COS1 *COS24_SQRT_2 +
COS8_SQRT_2*COS31, COS31*COS24_SQRT_2 - COS1*COS8_SQRT_2,
COS29*COS24_SQRT_2 + COS8_SQRT_2*COS3, - COS5*COS24_SQRT_2 -
COS8_SQRT_2*COS27, COS25*COS8_SQRT_2 - COS7*COS24_SQRT_2,
COS8_SQRT_2*COS9 - COS24_SQRT_2*COS23, - COS21_*COS24_SQRT_2 -
COS8_SQRT_2*COS11, COS13*COS24_SQRT_2 + COS8-SQRT-2*COS19,
COS15*COS24_SQRT_2 - COS17*COS8_SQRT_2},
{(COS18*COS8 _SQRT_2-COS14*COS24_SQRT_2),-(COS10*COS24_SQRT_
2+COS22*COS8_SQRT_2),
(COS24_SQRT_2*COS26+COS8_SQRT_2*COS6),-(COS2*COS8_SQRT_2-COS24_
SQRT_2*COS30), (COS30*COS8_SQRT_2+COS2*COS24_SQRT_2),
(COS6*COS24_SQRT_2-COS8_SQRT_2*COS26),-(COS10*COS8_SQRT_2-COS22*
COS24_SQRT_2),
(COS24_SQRT_2*COS18+COS8_SQRT_2*COS14),-(COS24_SQRT_2*COS18+COS
8_SQRT_2*COS14), (COS10*COS8_SQRT_2-COS22*COS24_SQRT_2),
-(COS6*COS24_SQRT_2-COS8_SQRT_2*COS26),-(COS30*COS8_SQRT_2+COS2*
COS24_SQRT_2),
(COS2*COS8_SQRT_2-COS24_SQRT_2*COS30),-(COS24_SQRT_2*COS26+COS8
_SQRT_2*COS6),
(COS10*COS24_SQRT_2+COS22*COS8_SQRT_2),-(COS18*COS8_SQRT_2-COS1
4*COS24_SQRT_2),-(COS18*COS8_SQRT_2-COS14*COS24_SQRT_2),
(COS10*COS24_SQRT_2+COS22*COS8_SQRT_2),-(COS24_SQRT_2*COS26+COS
8_SQRT_2*COS6),
(COS2*COS8_SQRT_2-COS24_SQRT_2*COS30),-(COS30*COS8_SQRT_2+COS2*
COS24_SQRT_2), -(COS6*COS24_SQRT_2-COS8_SQRT_2*COS26),
(COS10*COS8_SQRT_2-COS22*COS24_SQRT_2),-(COS24_SQRT_2*COS18+COS
8_SQRT_2*COS14),
(COS24_SQRT_2*COS18+COS8_SQRT_2*COS14),-(COS10*COS8_SQRT_2-COS2
2*COS24_SQRT_2), (COS6*COS24_SQRT_2-COS8_SQRT_2*COS26),
(COS30*COS8_SQRT_2+COS2*COS24_SQRT_2),-(COS2*COS8_SQRT_2-COS24_
SQRT_2*COS30),
(COS24_SQRT_2*COS26+COS8_SQRT_2*COS6),-(COS10*COS24_SQRT_2+COS2
2*COS8_SQRT_2), (COS18*COS8_SQRT_2-COS14*COS24_SQRT_2)},
{(COS17*COS28 + COS4*COS15) - (COS17*COS4 - COS15*COS28),
(COS12*COS19 - COS13*COS20) - (COS12*COS13 + COS20*COS19),
(COS12*COS21 + COS20*COS11) + (COS12*COS11 - COS21 *COS20), -
(COS4*COS9 - COS28*COS23) - (COS4*COS23 + COS9*COS28), (COS25*COS4 -
COS7*COS28) + (COS25*COS28 + COS4*COS7), - (COS12*COS5 + COS20*COS27)
- (COS12*COS27 - COS5*COS20), (COS12*COS29 + COS20*COS3) - (COS12*COS3
- COS29*COS20), (COS1*COS4 - COS31*COS28) - (COS1*COS28 + COS4*COS31),
- (COS1*COS4 - COS31*COS28) - (COS1*COS28 + COS4*COS31), (COS12*COS29
+ COS20*COS3) + (COS12*COS3 - COS29*COS20), (COS12*COS27 -

COS5*COS20) - (COS12*COS5 + COS20*COS27), (COS25*COS28 + COS4*COS7) - (COS25*COS4 - COS7*COS28), (COS4*COS23 + COS9*COS28) - (COS4*COS9 - COS28*COS23), (COS12*COS11 - COS21*COS20) - (COS12*COS21 + COS20*COS11), (COS12*COS13 + COS20*COS19) + (COS12*COS19 - COS13*COS20), - (COS17*COS4 - COS15*COS28) - (COS17*COS28 + COS4*COS15), (COS17*COS4 - COS15*COS28) + (COS17*COS28 + COS4*COS15), - (COS12*COS13 + COS20*COS19) - (COS12*COS19 - COS13*COS20), (COS12*COS21 + COS20*COS11) - (COS12*COS11 - COS21*COS20), (COS4*COS9 - COS28*COS23) - (COS4*COS23 + COS9*COS28), (COS25*COS4 - COS7*COS28) - (COS25*COS28 + COS4*COS7), (COS12*COS5 + COS20*COS27) - (COS12*COS27 - COS5*COS20), - (COS12*COS29 + COS20*COS3) - (COS12*COS3 - COS29*COS20), (COS1*COS4 - COS31*COS28) + (COS1*COS28 + COS4*COS31), (COS1*COS28 + COS4*COS31) - (COS1*COS4 - COS31*COS28), (COS12*COS3 - COS29*COS20) - (COS12*COS29 + COS20*COS3), (COS12*COS5 + COS20*COS27) + (COS12*COS27 - COS5*COS20), - (COS25*COS4 - COS7*COS28) - (COS25*COS28 + COS4*COS7), (COS4*COS9 - COS28*COS23) + (COS4*COS23 + COS9*COS28), - (COS12*COS21 + COS20*COS11) - (COS12*COS11 - COS21*COS20), (COS12*COS13 + COS20*COS19) - (COS12*COS19 - COS13*COS20), (COS17*COS4 - COS15*COS28) - (COS17*COS28 + COS4*COS15)},
{((COS12-COS20)<<S_BIT),-((COS4-COS28)<<S_BIT), ((COS4+COS28)<<S_BIT),-((COS12+COS20)<<S_BIT), ((COS12+COS20)<<S_BIT),-((COS4+COS28)<<S_BIT), ((COS4-COS28)<<S_BIT),-((COS12-COS20)<<S_BIT),-((COS12-COS20)<<S_BIT), ((COS4-COS28)<<S_BIT),-((COS4+COS28)<<S_BIT), ((COS12+COS20)<<S_BIT),-((COS12+COS20)<<S_BIT), ((COS4+COS28)<<S_BIT),-((COS4-COS28)<<S_BIT), ((COS12-COS20)<<S_BIT), ((COS12-COS20)<<S_BIT),-((COS4-COS28)<<S_BIT), ((COS4+COS28)<<S_BIT),-((COS12+COS20)<<S_BIT), ((COS12+COS20)<<S_BIT),-((COS4+COS28)<<S_BIT), ((COS4-COS28)<<S_BIT),-((COS12-COS20)<<S_BIT),-((COS12-COS20)<<S_BIT), ((COS4-COS28)<<S_BIT),-((COS4+COS28)<<S_BIT), ((COS12+COS20)<<S_BIT),-((COS12+COS20)<<S_BIT), ((COS4+COS28)<<S_BIT),-((COS4-COS28)<<S_BIT), ((COS12-COS20)<<S_BIT)},
{COS12_SQRT_2*COS17 - COS20_SQRT_2*COS15, COS13*COS28_SQRT_2 - COS4_SQRT_2*COS19, COS21*COS4_SQRT_2 + COS11*COS28_SQRT_2, - COS12_SQRT_2*COS23 - COS9*COS20_SQRT_2, COS12_SQRT_2*COS7 + COS25*COS20_SQRT_2, - COS4_SQRT_2*COS5 - COS28_SQRT_2*COS27, COS4_SQRT_2*COS3 - COS29*COS28_SQRT_2, COS31_*COS20_SQRT_2 - COS1_*COS12_SQRT_2, COS1_*COS20_SQRT_2 + COS12_SQRT_2*COS31, - COS29*COS4_SQRT_2 - COS3*COS28_SQRT_2, COS4_SQRT_2*COS27 - COS5*COS28_SQRT_2, COS20_SQRT_2*COS7 - COS12_SQRT_2*COS25, COS20_SQRT_2*COS23 - COS12_SQRT_2*COS9, COS4_SQRT_2*COS11 - COS21_*COS28_SQRT_2, - COS13*COS4_SQRT_2 - COS19*COS28_SQRT_2, COS12_SQRT_2*COS15 + COS17*COS20_SQRT_2, - COS12_SQRT_2*COS15 - COS17*COS20_SQRT_2, COS13*COS4_SQRT_2 + COS19*COS28_SQRT_2, COS21_*COS28_SQRT_2 - COS4_SQRT_2*COS11, COS12_SQRT_2*COS9 - COS20_SQRT_2*COS23, COS12_SQRT_2*COS25 - COS20_SQRT_2*COS7, COS5*COS28_SQRT_2 - COS4_SQRT_2*COS27, COS29*COS4_SQRT_2 + COS3*COS28_SQRT_2, - COS1*COS20_SQRT_2 - COS12_SQRT_2*COS31, COS1*COS12_SQRT_2 - COS31*COS20_SQRT_2, COS29*COS28_SQRT_2 - COS4_SQRT_2*COS3, COS4_SQRT_2*COS5 + COS28_SQRT_2*COS27, - COS12_SQRT_2*COS7 - COS25*COS20_SQRT_2, COS12_SQRT_2*COS23 + COS9*COS20_SQRT_2, - COS21_*COS4_SQRT_2 - COS11*COS28_SQRT_2, COS4_SQRT_2*COS19 - COS13*COS28_SQRT_2, COS20_SQRT_2*COS15 - COS12_SQRT_2*COS17},
{(COS14-COS18)<<S_BIT,-(COS10-COS22)<<S_BIT, (COS6-COS26)<<S_BIT,-(COS2-COS30)<<S_BIT, (COS2+COS30)<<S_BIT,-(COS6+COS26)<<S_BIT, (COS10+COS22)<<S_BIT,-(COS14+COS18)<<S_BIT, (COS14+COS18)<<S_BIT,-(COS10+COS22)<<S_BIT, (COS6+COS26)<<S_BIT,-(COS2+COS30)<<S_BIT, (COS2-COS30)<<S_BIT,-(COS6-COS26)<<S_BIT, (COS10-COS22)<<S_BIT,

```
        -(COS14-COS18)<<S_BIT, -(COS14-COS18)<<S_BIT,
        (COS10-COS22)<<S_BIT,-(COS6-COS26)<<S_BIT,
        (COS2-COS30)<<S_BIT,-(COS2+COS30)<<S_BIT,
        (COS6+COS26)<<S_BIT,-(COS10+COS22)<<S_BIT,
        (COS14+COS18)<<S_BIT,-(COS14+COS18)<<S_BIT,
        (COS10+COS22)<<S_BIT,-(COS6+COS26)<<S_BIT,
        (COS2+COS30)<<S_BIT,-(COS2-COS30)<<S_BIT,
        (COS6-COS26)<<S_BIT,-(COS10-COS22)<<S_BIT, (COS14-COS18)<<S_BIT},
        {COS16_SQRT_2*COS15 - COS17*COS16_SQRT_2,
        COS16_SQRT_2*COS19 - COS13*COS16_SQRT_2, COS16_SQRT_2*COS11 -
        COS21 *COS16_SQRT_2, COS16_SQRT_2*COS23 - COS9*COS16_SQRT_2,
        COS16_SQRT_2*COS7 - COS25*COS16_SQRT_2, COS16_SQRT_2*COS27 -
        COS5*COS16_SQRT_2, COS16_SQRT_2*COS3 - COS29*COS16_SQRT_2,
        COS16_SQRT_2*COS31 - COS1 *COS16_SQRT_2, COS1 *COS16_SQRT_2 +
        COS31*COS16_SQRT_2, - COS16_SQRT_2*COS29 - COS16_SQRT_2*COS3,
        COS16_SQRT_2*COS5 + COS16_SQRT_2*COS27, - COS16_SQRT_2*COS25 -
        COS16_SQRT_2*COS7, COS16_SQRT_2*COS9 + COS16_SQRT_2*COS23, -
        COS16_SQRT_2*COS21 - COS16_SQRT_2*COS11, COS13*COS16_SQRT_2 +
        COS19*COS16_SQRT_2, - COS16_SQRT_2*COS17 - COS16_SQRT_2*COS15,
        COS16_SQRT_2*COS17 + COS16_SQRT_2*COS15, - COS13*COS16_SQRT_2 -
        COS19*COS16_SQRT_2, COS16_SQRT_2*COS21 + COS16_SQRT_2*COS11, -
        COS16_SQRT_2*COS9 - COS16_SQRT_2*COS23, COS16_SQRT_2*COS25 +
        COS16_SQRT_2*COS7, - COS16_SQRT_2*COS5 - COS16_SQRT_2*COS27,
        COS16_SQRT_2*COS29 + COS16_SQRT_2*COS3, - COS1*COS16_SQRT_2 -
        COS31 *COS16_SQRT_2, COS1*COS16_SQRT_2 - COS16_SQRT_2*COS31,
        COS29*COS16_SQRT_2 - COS16_SQRT_2*COS3, COS5*COS16_SQRT_2 -
        COS16_SQRT_2*COS27, COS25*COS16_SQRT_2 - COS16_SQRT_2*COS7,
        COS9*COS16_SQRT_2 - COS16_SQRT_2*COS23, COS21 *COS16_SQRT_2 -
        COS16_SQRT_2*COS11, COS13*COS16_SQRT_2 - COS16_SQRT_2*COS19,
        COS17*COS16_SQRT_2 - COS16_SQRT_2*COS15},
          };
```

Referring back to FIG. 3, the transformer 120 performs the N point DCT by using the transformation matrix formed of the elements having integer values, in operation 320.

In operation 330, the transformer 120 de-scales result values of performing the N point DCT by using the predetermined scaling factor. The result values of performing the N point DCT is de-scaled so as to compensate for differences between the transformation matrix formed of the elements having the integer values and an original transformation matrix for the N point DCT. Since the elements having the integer values have values obtained by multiplying a square value of the predetermined scaling factor and the elements of the original transformation matrix, the de-scaling may be performed by dividing the elements having the integer values by S^2. As described above, when S_BIT is defined to be $\log_2 S$, the de-scaling may be performed by performing a right shift operation (>>) by 2*S_BIT on the result values of the N point DCT. Such a de-scaling process performed through the right shift operation (>>) may be combined with a quantization process performed by the quantizer 130, instead of being performed by the transformer 120. In detail, the de-scaling process may be combined to the quantization process by performing the quantization process using a new quantization step of performing the right shift operation (>>) by 2*S_BIT on a value of a quantization step Qstep applied with respect to a transformation coefficient value, i.e., by dividing the value of the quantization step Qstep by S^2.

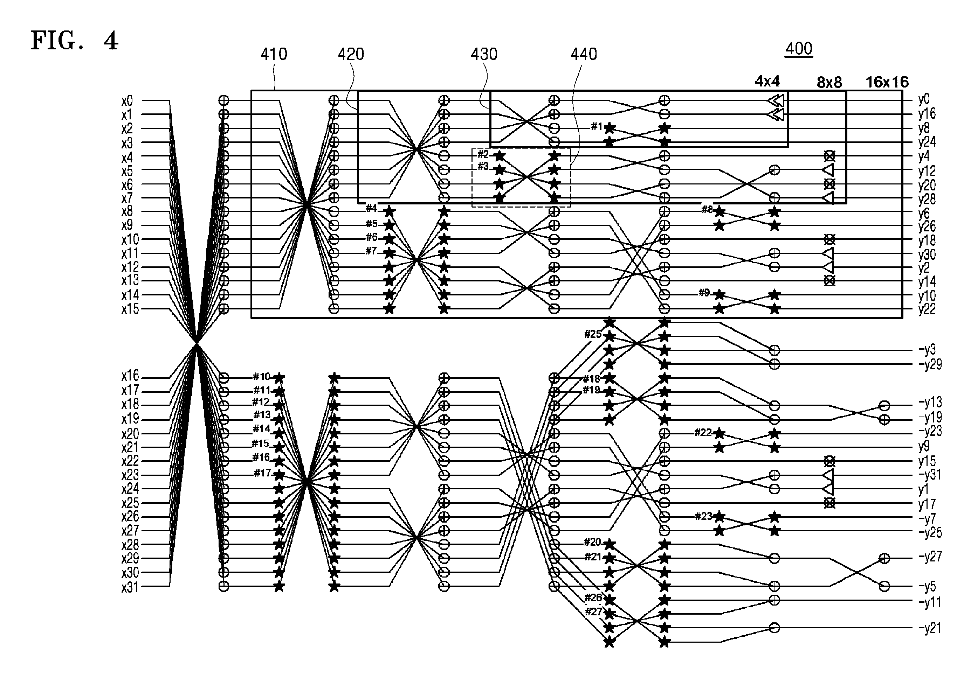

The transformation matrix of the N point DCT formed of the elements having integer values may be realized as a flow graph 400 of FIG. 4.

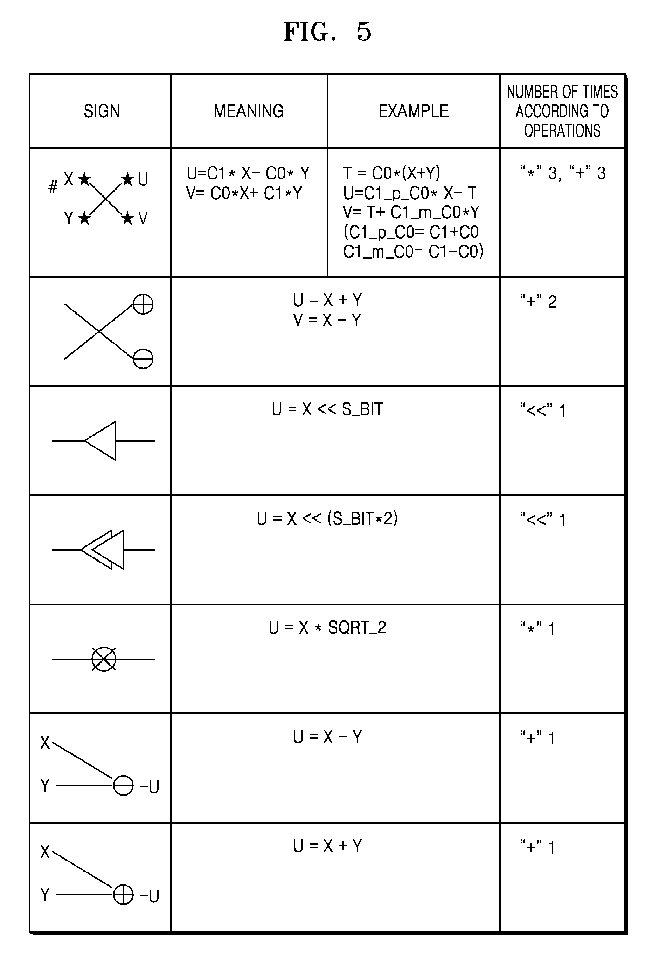

FIG. 4 is the flow graph 400 of processes of 32 point, 16 point, 8 point, and 4 point DCTs, according to an embodiment of the present invention. FIG. 5 is a reference table for describing each operation element of FIG. 4. In FIG. 4, a box 410 is a flow graph of a 16 point DCT, a box 420 is a flow graph of an 8 point DCT, and a box 430 is a flow graph of 4 point 1D transformation.

The flow graph 400 of FIG. 4 is realized according to the transformation matrix for N point DCT formed of the elements having integer values described above. In detail, X0 through X31 denote input values of 32 point DCT, and Y0 through Y31 denote result values of 32 point DCT. Alternatively, when Y0 through Y31 denote input values, X0 through X31 are output values of a 32 point IDCT. In other words, X0 through X31 denote the input values of 32 point DCT and also denote the output values of 32 point IDCT. A data processing direction is from left to right during the 32 point DCT and is from right to left during the 32 point IDCT.

Each operation sign shown in FIG. 4 will now be described with reference to FIG. 5.

Referring to FIG. 5, an operation 510 is performed to obtain result values U and V, wherein U and V are real numbers, according to U=C1 *X-C0*Y and V=C0*X+C1*Y, wherein C0 and C1 are real numbers, with respect to intermediate values X and Y, wherein X and Y are real numbers. When C0 is cosθ and C1 is sinθ, the operation 510 corresponds to rotational transform for outputting (U, V) obtained by rotating (X, Y) by θ.

According to the rotational transform, total 4 multiplications including 2 multiplications for calculating the value U and 2 multiplications for calculating the value V are performed. While performing the rotational transform according to the operation 510, the transformer 120 performs a changed operation by calculating a value T, wherein T is a real number, and then calculating the values U and V by adding or subtracting the value T after multiplying C1_p_C0 and C1_m_C0 obtained by using C1 and C0, and the input values X and Y. Here, C1_p_C0=C1+C0 and C1_m_C0=C1-C0.

T=C0*(X+Y); U=C1_p_C0*X-T; V=T+C1_m_C0*Y

As such, when the rotational transform is replaced by such an operation, total 3 multiplications are performed since one multiplication is performed with respect to each of operations for calculating the values T, U, and V. As such, the total 4 multiplications may be reduced to total 3 multiplications. Due to such replacement, a number of additions or subtractions may be increased, but calculation complexity of addition and subtraction is remarkably lower than that of multiplication.

Meanwhile, C1 and C0 are values determined according to #n, and when C0 is cosθ and C1 is sinθ as described above, C1 may be determined according to C0. Also, values of C0, C1_p_C0, and C1_m_C0 used according to #n of FIG. 5 based on Table 1 above are as Table 2 below.

[Table 2]

| #n | C0 | C1_p_C0 | C1_m_C0 |
|---|---|---|---|
| #1 | COS8_SQRT_2<<S_BIT | (COS24_SQRT_2<<S_BIT) + (COS8_SQRT_2<<S_BIT) | (COS24_SQRT_2<<S_BIT) - (COS8_SQRT_2<<S_BIT) |
| #2 | COS20 | COS20+COS12 | -COS20+COS12 |
| #3 | COS28 | COS28+COS4 | -COS28+COS4 |
| #4 | COS18 | COS18+COS14 | -COS18+COS14 |
| #5 | -COS10 | -COS10+COS22 | COS10+COS22 |
| #6 | COS26 | COS26+COS6 | -COS26+COS6 |
| #7 | -COS2 | -COS2+COS30 | COS2+COS30 |
| #8 | COS8_SQRT_2 | COS24_SQRT_2+COS8_S QRT_2 | COS24_SQRT_2-COS8_S QRT_2 |
| #9 | -COS24_SQRT_2 | -COS24_SQRT_2+COS8_S QRT_2 | COS24_SQRT_2+COS8_S QRT_2 |
| #10 | -COS15 | -COS15+COS17 | COS15+COS17 |
| #11 | COS19 | COS19+COS13 | COS19-COS13 |
| #12 | -COS11 | - COS11+COS21 | COS11 +COS21 |
| #13 | COS23 | COS23+ COS9 | COS23- COS9 |
| #14 | -COS7 | -COS7+COS25 | COS7+COS25 |
| #15 | COS27 | COS27+ COS5 | COS27- COS5 |
| #16 | -COS3 | -COS3+ COS29 | -COS3+ COS29 |
| #17 | COS31 | COS31+ COS1 | COS31- COS1 |
| #18 | -COS20 | -COS20+COS12 | COS20+COS12 |
| #19 | -COS28 | -COS28+COS4 | COS28+COS4 |
| #20 | COS28 | COS28+COS4 | -COS28+COS4 |
| #21 | COS20 | COS20+COS12 | -COS20+COS12 |

(continued)

| #n | C0 | C1_p_C0 | C1_m_C0 |
|---|---|---|---|
| #22 | -COS24_SQR T_2 | COS8_SQRT_2-COS24_S QRT_2 | COS8_SQRT_2+COS24_S QRT_2 |
| #23 | -COS24_SQR T_2 | COS8_SQRT_2-COS24_S QRT_2 | COS8_SQRT_2+COS24_S QRT_2 |
| #24 | -COS20_SQR T_2 | -COS20_SQRT_2+COS12_ SQRT_2 | COS20_SQRT_2+COS12_ SQRT_2 |
| #25 | -COS28_SQR T_2 | -COS28_SQRT_2+COS4_S QRT_2 | COS28_SQRT_2+COS4_S QRT_2 |
| #26 | COS28_SQRT _2 | COS28_SQRT_2+COS4_S QRT_2 | -COS28_SQRT_2+COS4_S QRT_2 |
| #27 | COS20_SQRT _2 | COS20_SQRT_2+COS12_ SQRT_2 | -COS20_SQRT_2+COS12_ SQRT_2 |

A process of performing an operation 440 of FIG. 4 based on Table 2 will now be described.

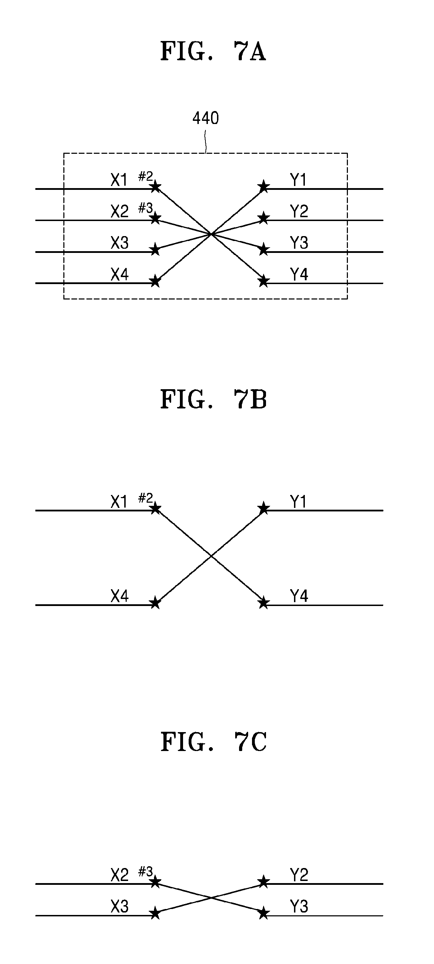

FIGS. 7A through 7C are diagrams for describing the operation 440 of FIG. 4.

Referring to FIG. 7A, X1 through X4 indicate intermediate values input during the operation 440, and Y1 through Y indicate output values. The operation 440 shown in FIG. 7A includes operations shown in FIGS. 7B and 7C.

Referring to FIG. 7B, the transformer 120 performs an operation on the intermediate values X1 and X4 according to a following algorithm to output the output values Y1 and Y4.

$$\{ T=C0*(X1+X4); U=C1\_p\_C0*X1-T; V=T+C1\_m\ C0*X4 \}$$

Referring to Table 2, values of C0=COS20, C1_p_C0=COS20+COS12, and C1_m_C0=-COS20+COS12 are used as values of C0, C1_p_C0, and C1_m_C0 when #n is #2.

Similarly, referring to FIG. 7C, the transformer 120 performs an operation on the intermediate values X2 and X3 according to a following algorithm to output the output values Y2 and Y3.

$$\{T=C0*(X2+X3); U=C1\_p\_C0*X2-T; V=T+C1\_m\_C0*X3\}$$

Referring to Table 2, values of C0=COS28, C1_p_C0=-COS28+COS4, and C1_m_C0=-COS28+COS4 are used as values of C0, C1_p_C0, and C1_m_C0 when #n is #3.

As described above, an operation 510 of FIG. 4 may be performed by using a parameter according to #n shown in Table 2.

Referring back to FIG. 5, an operation 520 outputs the output values U and V by adding or subtracting the intermediate values X and Y, an operation 530 performs a left shift operation (<<) on the intermediate value X by a predetermined bit S_BIT, an operation 540 performs a left shift operation (<<) on the intermediate value X by a predetermined bit 2*S_BIT, an operation 550 outputs a square root of the intermediate value X, an operation 560 indicates subtraction, and an operation 570 indicates addition.

The transformer 120 may perform the 32 point DCT described above according to an algorithm below.

```
{
E[16],O[16];
EE[8],EO[8];
EEE[4],EEO[4];
EEEE[2],EEEO[2];
for (k=0;k<16;k++)
 {
  E[k] = block[k] + block[31-k];
  O[k] = block[k] - block[31-k];
 }
 /* EE and EO */
 for (k=0;k<8;k++)
 {
```

```
 EE[k] = E[k] + E[15-k];
 EO[k] = E[k] - E[15-k];
 }
/* EEE and EEO */
for (k=0;k<4;k++)
 {
 EEE[k] = EE[k] + EE[7-k];
 EEO[k] = EE[k] - EE[7-k];
 }
/* EEEE and EEEO */
EEEE[0] = EEE[0] + EEE[3];
EEEO[0] = EEE[0] - EEE[3];
EEEE[1] = EEE[1] + EEE[2];
EEEO[1] = EEE[1] - EEE[2];
 xBoxE2 (EEEE, EEEE);
 xBoxO2 (EEEO, EEEO);
 xBoxO4 (EEO, EEO);
 xBoxO8 (EO, EO);
 xBoxO16 (O, O);
 coeff[0] = EEEE[0];
 coeff[16] = EEEE[1];
 coeff[8] = EEEO[0];
 coeff[24] = EEEO[1];
 coeff[4] = EEO[0];
 coeff[12] = EEO[1];
 coeff[20] = EEO[2];
 coeff[28] = EEO[3];
 coeff[2] = EO[0];
coeff[6] = EO[1];
coeff[10] = EO[2];
 coeff[14] = EO[3];
 coeff[18] = EO[4];
coeff[22] = EO[5];
coeff[26] = EO[6];
 coeff[30] = EO[7];
 coeff[1] = O[0];
 coeff[3] = O[1];
 coeff[5] = O[2];
 coeff[7] = O[3];
 coeff[9] = O[4];
 coeff[11] = O[5];
 coeff[13] = O[6];
 coeff[15] = O[7];
 coeff[17] = O[8];
 coeff[19] = O[9];
 coeff[21] = O[10];
 coeff[23] = O[11];
 coeff[25] = O[12];
 coeff[27] = O[13];
 coeff[29] = O[14];
 coeff[31] = O[15];
   }
```

A sub-routine included in the above algorithm is as follows.

```
xBoxE2(Int* Ein, Int* Eout)
   {
        Int EE[2];
        EE[0] = Ein[0]+Ein[1];
        EE[1] = Ein[0]-Ein[1];
        Eout[0] = (EE[0]<<12);
        Eout[1] = (EE[1]<<12);
   }
```

```
    xBoxO2(Int* Oin, Int* Oout)
     {
   Givens(Oin[0],Oin[1],Oout[1],Oout[0],5312,7616,-3008);
    }
     xBoxO4(Int* Oin, Int* Oout)
{
     Int iStage[4][3];
     Givens(Oin[0],Oin[3],iStage [0][0],iStage [3][0],36,89,17);
     Givens(Oin[1],Oin[2],iStage [1][0],iStage [2][0],12,75,51);
     istage [0][1] = istage [0][0]+iStage [2][0];
     istage [1][1] = istage [0][0]-iStage [2][0];
     istage [2][1] = istage [3][0]-iStage [1][0];
     iStage [3][1] = istage [3][0]+iStage [1][0];
   Oout[0] = ((iStage [0][1]+iStage [3][1])<<6);
   Oout[1] = iStage [1][1]* 90 ;
   Oout[2] = iStage [2][1]* 90 ;
   Oout[3] = ((iStage [0][1]-iStage [3][1])<<6);
}
xBoxO8(Int* Oin, Int* Oout)
{
     Int iStage16[8][4];
     Givens(Oin[0],Oin[7],iStage16[7][0],iStage16[0][0],41,90,8);
     Givens(Oin[6],Oin[1],iStage16[1][0],iStage16[6][0],56,86,-26);
     Givens(Oin[2],Oin[5],iStage16[5][0],iStage16[2][0],19,80,42);
     Givens(Oin[4],Oin[3],iStage16[3][0],iStage16[4][0],64,70,-58);
     iStage16[0][1] =iStage16[0][0] + iStage16[3][0];
     iStage16[1][1] =iStage16[1][0] + iStage16[2][0];
     iStage16[2][1] =iStage16[1][0] - iStage16[2][0];
     iStage16[3][1] =iStage16[0][0] - iStage16[3][0];
     iStage16[4][1] =iStage16[4][0] + iStage16[7][0];
     iStage16[5][1] =iStage16[5][0] + iStage16[6][0];
     iStage16[6][1] =iStage16[5][0] - iStage16[6][0];
     iStage16[7][1]=iStage16[4][0] - iStage16[7][0];
     iStage16[0][2] =iStage16[0][1] + iStage16[6][1];
     iStage16[1][2] =iStage16[1][1] + iStage16[7][1];
     iStage16[2][2] =iStage16[2][1] + iStage16[3][1];
     iStage16[3][2] =iStage16[2][1] - iStage16[3][1];
     iStage16[4][2] =iStage16[4][1] + iStage16[5][1];
     iStage16[5][2] =iStage16[4][1] - iStage16[5][1];
     iStage16[6][2] =iStage16[0][1] - iStage16[6][1];
     iStage16[7][2] =iStage16[1][1] - iStage16[7][1];
     Givens(iStage16[0][2],iStage16[1][2],iStage16[0][3],iStage16[1][3],83,119,
     -47);
   Givens(iStage16[7][2],iStage16[6][2],iStage16[6][3],iStage16[7][3],36,119,47);
     iStage16[3][3] = (iStage16[4][2] + iStage16[3][2])<<6;
     iStage16[4][3] = (iStage16[4][2] - iStage16[3][2])<<6;
     iStage16[2][3] = iStage16[2][2]*90;
     iStage16[5][3] = iStage16[5][2]*90;
    Oout[O] = iStage16[4][3];
    Oout[1] = iStage16[0][3];
    Oout[2] = iStage16[7][3];
   Oout[3] = iStage16[5][3];
   Oout[4] = iStage16[2][3];
    Oout[5] = iStage16[6][3];
    Oout[6] = iStage16[1][3];
   Oout[7] = iStage16[3][3];
}
xBoxO16(Int* Oin, Int* Oout)
{
     Int iStage32[22][5];
       Givens(Oin[15],Oin[0],iStage32[0][0],iStage32[15][0],47,90,-4);
       Givens(Oin[1],Oin[14],iStage32[14][0],iStage32[1][0],38,89,13);
       Givens(Oin[13],Oin[2],iStage32[2][0],iStage32[13][0],55,88,-22);
```

```
Givens(Oin[3],Oin[12],iStage32[12][0],iStage32[3][0],27,85,31);
Givens(Oin[11],Oin[4],iStage32[4][0],iStage32[11][0],60,82,-38);
Givens(Oin[5],Oin[10],iStage32[10][0],iStage32[5][0],16,78,46);
Givens(Oin[9],Oin[6],iStage32[6][0],iStage32[9][0],63,72,-54);
Givens(Oin[7],Oin[8],iStage32[8][0],iStage32[7][0],3,67,61);
iStage32[0][1]=iStage32[0][0] + iStage32[7][0];
iStage32[1][1] =iStage32[1][0] + iStage32[6][0];
iStage32[2][1] =iStage32[2][0] + iStage32[5][0];
iStage32[3][1] =iStage32[3][0] + iStage32[4][0];
iStage32[4][1] =iStage32[3][0] - iStage32[4][0];
iStage32[5][1] =iStage32[2][0] - iStage32[5][0];
iStage32[6][1] =iStage32[1][0] - iStage32[6][0];
iStage32[7][1] =iStage32[0][0] - iStage32[7][0];
iStage32[8][1] =iStage32[8][0] + iStage32[15][0];
iStage32[9][1] =iStage32[9][0] + iStage32[14][0];
iStage32[10][1] =iStage32[10][0] + iStage32[13][0];
iStage32[11][1] =iStage32[11][0] + iStage32[12][0];
iStage32[12][1] =iStage32[11][0] - iStage32[12][0];
iStage32[13][1] =iStage32[10][0] - iStage32[13][0];
iStage32[14][1] =iStage32[9][0] - iStage32[14][0];
iStage32[15][1] =iStage32[8][0] - iStage32[15][0];
iStage32[0][2] =iStage32[0][1] + iStage32[12][1];
iStage32[1][2] =iStage32[1][1] + iStage32[13][1];
iStage32[2][2] =iStage32[2][1] + iStage32[14][1];
iStage32[3][2] =iStage32[3][1] + iStage32[15][1];
iStage32[4][2] =iStage32[4][1] + iStage32[7][1];
iStage32[5][2] =iStage32[5][1] + iStage32[6][1];
iStage32[6][2] =iStage32[5][1] - iStage32[6][1];
iStage32[7][2] =iStage32[4][1] - iStage32[7][1];
iStage32[8][2] =iStage32[8][1] + iStage32[11][1];
iStage32[9][2] =iStage32[9][1] + iStage32[10][1];
iStage32[10][2] =iStage32[9][1] - iStage32[10][1];
iStage32[11][2] =iStage32[8][1] - iStage32[11][1];
iStage32[12][2] =iStage32[0][1] - iStage32[12][1];
iStage32[13][2] =iStage32[1][1] - iStage32[13][1];
iStage32[14][2] =iStage32[2][1] - iStage32[14][1];
iStage32[15][2] =iStage32[3][1] - iStage32[15][1];
Givens(iStage32[3][2],iStage32[0][2],iStage32[15][4],iStage32[0][4],50,125,25);
Givens(iStage32[2][2],iStage32[1][2],iStage32[17][4],iStage32[16][4],18,107,71);
Givens(iStage32[3][2],iStage32[0][2],iStage32[3][3],iStage32[0][3],36,89,17);
Givens(iStage32[2][2],iStage32[1][2],iStage32[2][3],iStage32[1][3],12,75,51);
iStage32[4][3] = iStage32[4][2] + iStage32[10][2];
iStage32[5][3] = iStage32[5][2] + iStage32[11][2];
iStage32[6][3] = iStage32[6][2] + iStage32[7][2];
iStage32[7][3] = iStage32[6][2] - iStage32[7][2];
iStage32[8][3] = iStage32[8][2] + iStage32[9][2];
iStage32[9][3] = iStage32[8][2] - iStage32[9][2];
iStage32[10][3] = iStage32[4][2] - iStage32[10][2];
iStage32[11][3] = iStage32[5][2] - iStage32[11][2];
Givens(iStage32[12][2],iStage32[15][2],iStage32[12][3],iStage32[15][3],12,75,51)
Givens(iStage32[13][2],iStage32[14][2],iStage32[13][3],iStage32[14][3],36,89,17)
Givens(iStage32[12][2],iStage32[15][2],iStage32[18][4],iStage32[19][4],18,107,71);
Givens(iStage32[13][2],iStage32[14][2],iStage32[20][4],iStage32[21][4],50,125,25);
Givens(iStage32[5][3],iStage32[4][3],iStage32[5][4],iStage32[4][4],36,119,47);
Givens(iStage32[11][3],iStage32[10][3],iStage32[11][4],iStage32[10][4],36,119,4
7);
iStage32[2][4] = -iStage32[0][3] + iStage32[2][3];
iStage32[3][4] = -iStage32[1][3] + iStage32[3][3];
iStage32[6][4] = 90*iStage32[6][3] ;
iStage32[7][4] = (iStage32[7][3] + iStage32[8][3])<<6;
iStage32[8][4] = (-iStage32[7][3] + iStage32[8][3])<<6;
iStage32[9][4] = 90*iStage32[9][3] ;
iStage32[13][4] = iStage32[12][3] - iStage32[13][3];
```

```
    iStage32[14][4] = iStage32[14][3] + iStage32[15][3];
  Oout[0] = iStage32[8][4];
  Oout[1] = - iStage32[0][4] - iStage32[17][4];
  Oout[2] = -iStage32[13][4] + iStage32[14][4];
  Oout[3] = - iStage32[10][4];
  Oout[4] = iStage32[5][4];
  Oout[5] = - iStage32[18][4] - iStage32[20][4];
  Oout[6] = -iStage32[3][4] + iStage32[2][4];
   Oout[7] = iStage32[6][4];
   Oout[8] = iStage32[9][4];
   Oout[9] = iStage32[3][4] + iStage32[2][4];
  Out[10] = - iStage32[21][4] + iStage32[19][4];
  Oout[11] = -iStage32[4][4];
  Oout[12] = - iStage32[11][4];
  Oout[13] = -iStage32[13][4] - iStage32[14][4];
  Oout[14] = - iStage32[16][4] - iStage32[15][4];
   Oout[15]= -iStage32[7][4];
 }
```

Meanwhile, according to an embodiment of the present invention, elements of a transformation matrix for an N point DCT having integer values or parameter values shown in Tables 1 and 2 may be pre-calculated and pre-stored in a form of a table, and the transformer 120 may perform transformation by using the elements of the transformation matrix for the N point DCT having the pre-calculated and pre-stored parameter values or integer values.

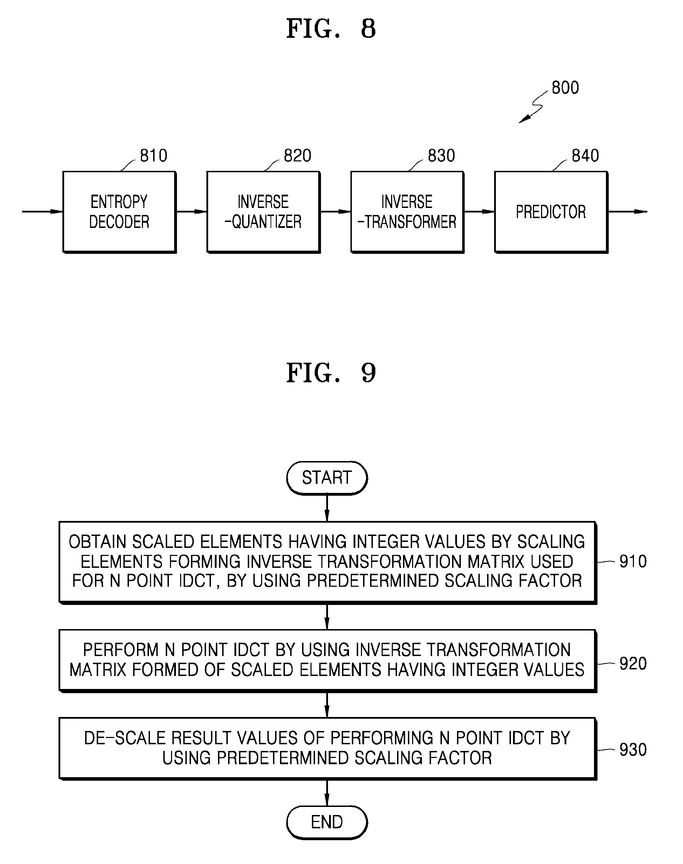

FIG. 8 is a block diagram of an apparatus 800 for inverse-transforming an image, according to an embodiment of the present invention.

Referring to FIG. 8, the apparatus 800 includes an entropy decoder 810, an inverse-quantizer 820, an inverse-transformer 830, and a predictor 840.

The entropy decoder 810 extracts prediction mode information, reference picture information, and residual information of a current block to be decoded, from an input bitstream.

The inverse-quantizer 820 inverse-quantizes quantized transformation coefficients that are entropy-decoded by the entropy decoder 810.

The inverse-transformer 830 inverse-transforms the inverse-quantized transformation coefficients. As a result, residual values in a block unit are restored. In detail, the inverse-transformer 830 performs an inverse-transformation process corresponding to the transformation process performed by the transformer 120 of FIG. 1. In other words, the inverse-transformer 830 generates an inverse transformation matrix for an N point IDCT formed of elements having integer values by scaling elements of an original inverse transformation matrix for the N point IDCT, by using a predetermined scaling factor, and performs N point IDCT by using the generated inverse transformation matrix. Also, the inverse-transformer 830 may perform de-scaling using the predetermined scaling factor again on result values of performing the N point IDCT by considering differences from result values according to the original inverse transformation matrix. Scaling and de-scaling processes may be realized in shift operations (>> and <<) when the predetermined scaling factor has a value of power of 2. The de-scaling process may be performed after the inverse-transformation process or may be combined to an inverse-quantization process.

The predictor 840 generates a prediction value of the current bock through inter prediction or intra prediction, and restores the current block by adding a residual restored by the inverse-transformer 830 and the generated prediction value.

Hereinafter, the inverse-transformation process performed by the inverse-transformer 830 of FIG. 8 will be described in detail. Like the transformation process performed by the transformer 120 of FIG. 1, the inverse-transformer 830 may perform the inverse-transformation process by obtaining the inverse transformation matrix for the N point IDCT formed of the elements having integer values by scaling $\sqrt{2} \cdot \cos(\dfrac{\pi(2n+1)k}{2N})$ included in an (k,n)th element

$B_{kn}$ of the inverse transformation amtrix defined according to Equation 2 above, and performing frequency inverse transformation using the obtained inverse trnasformation matrix.

FIG. 9 is a flowchart illustrating a method of inverse-transforming an image, according to an embodiment of the present invention.

Referring to FIGS. 8 and 9, the inverse-transformer 830 obtains elements having integer values by multiplying a scaling factor S and each element forming an inverse transformation matrix for an N point IDCT, and rounding off each element, in operation 810.

As described above, the inverse transformation matrix includes components of $\sqrt{2} \cdot \cos(\frac{\pi(2n+1)k}{2N})$.

The inverse-transformer 830 obtains the integer values by multiplying a predetermined scaling factor S and $\sqrt{2} \cdot \cos(\frac{\pi(2n+1)k}{2N})$, and then rounding off a result value. As described above, an element obtained by transforming $\sqrt{2} \cdot \cos(\frac{\pi(2n+1)k}{2N})$ to an integer value is represented by int(cos((2n+1)k)*sqrt(2.0)*S), and the element int(cos((2n+1)k)*sqrt(2.0)*S) is shown as COS_((2n+1)k)_SQRT_2. Parameters defined in Table 1 above may be used during the inverse-transformation process.

The inverse-transformer 830 performs a left shift operation (<<) using the scaling factor S on the value obtained by multiplying the scaling factor S to each element of the inverse transformation matrix and then rounding off each element. When S_BIT is defined to be $\log_2 S$, the inverse-transformer 830 obtains the inverse transformation matrix for the N point IDCT by performing the left shift operation (<<) again by S_BIT on COS_((2n+1)k)_SQRT_2. The inverse-transformer 830 scales the elements of the inverse transformation matrix by S^2 by multiplying the scaling factor S again to the result value obtained by multiplying the scaling factor S and the elements of the inverse transformation matrix and then rounding off the elements. IDCT_NxN[N][N] that is the inverse transformation matrix obtained through such a scaling process may be obtained by using an inverse matrix relationship or transposed relationship with DCT_NxN[N][N] that is the transformation matrix for the N point DCT described above.

Referring back to FIG. 9, the inverse-transformer 830 performs N point IDCT by using the inverse transformation matrix formed of the elements having integer values, in operation 920.

In operation 930, the inverse-transformer 820 de-scales result values of performing the N point IDCT by using the predetermined scaling factor. The result values of performing the N point IDCT is de-scaled so as to compensate for differences between the inverse transformation matrix formed of the elements having the integer values and the original inverse transformation matrix for the N point IDCT. Since the elements having the integer values have values obtained by multiplying a square value of the predetermined scaling factor and the elements of the original inverse transformation matrix, the de-scaling may be performed by dividing the elements having the integer values by S^2. As described above, when S_BIT is defined to be $\log_2 S$, the de-scaling may be performed by performing a right shift operation (>>) by 2*S_BIT on the result values of the N point IDCT. Such a de-scaling process performed through the right shift operation (>>) may be combined with an inverse quantization process performed by the inverse-quantizer 820, instead of being performed by the inverse-transformer 830. In detail, the de-scaling process may be combined to the inverse quantization process by performing the inverse quantization process using a new quantization step of performing the right shift operation (>>) by 2*S_BIT on a value of a quantization step Qstep applied during the inverse-quantization process, i.e., by dividing the value of the quantization step Qstep by S^2.

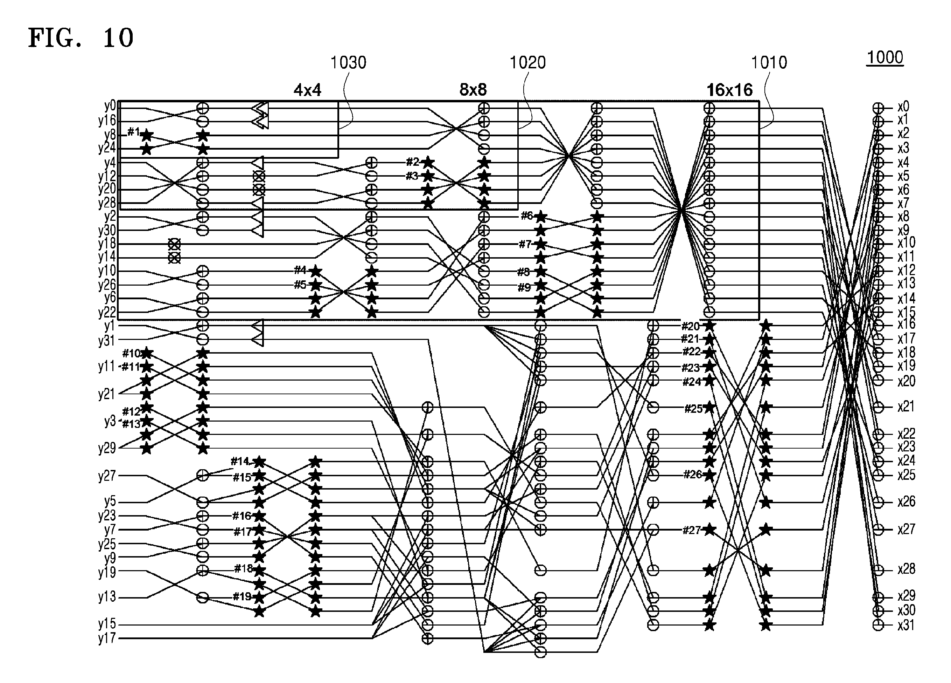

The inverse transformation matrix formed of the elements having integer values may be realized in a flow graph 1000 of FIG. 10.

FIG. 10 is the flow graph 1000 of processes of 32 point, 16 point, 8 point, and 4 point IDCTs, according to an embodiment of the present invention. Operations of each operation element shown in FIG. 10 are as described above with reference to FIG. 5. In FIG. 10, a block 1010 indicates a flow graph of a 16 point IDCT, a block 1020 indicates a flow graph of an 8 point IDCT, and a block 1030 indicates a flow graph of a 4 point IDCT.

The flow graph 1000 of FIG. 10 is realized according to an inverse transformation matrix for an N point IDCT formed of elements having integer values, according to an embodiment of the present invention. In detail, Y0 through Y31 denote input values of 32 point IDCT, and X0 through X31 denote result values according to 32 point IDCT.

As described above with reference to FIG. 4, rotational transform in FIG. 10 may be performed via a changed operation by calculating a value T and then calculating values U and V by adding or subtracting the value T after multiplying C1_p_C0 and C1_m_C0 obtained by using C1 and C0, and input values X and Y. Here, C1_p_C0=C1+C0 and C1_m_C0=C1-C0.

T=C0*(X+Y); U=C1_p_C0*X-T; V=T+C1_m_C0*Y

Meanwhile, C1 and C0 are values determined according to #n, and when C0 is $\cos\theta$ and C1 is $\sin\theta$ as described above, C1 may be determined according to C0. Also, values of C0, C1_p_C0, and C1_m_C0 used during the inverse-transformation process according to #n of FIG. 10 based on Table 1 above are as Table 3 below.

[Table 3]

| #n | C0 | C1_p_C0 | C1_m_C0 |
|---|---|---|---|
| #1 | COS8_SQRT _2<<S_BIT | (COS24_SQRT_2<<S_BIT) + (COS8_SQRT_2<<S_BIT) | (COS24_SQRT_2<<S_BIT) - (COS8_SQRT_2<<S_BIT) |
| #2 | -COS20 | -COS20+COS12 | COS20-COS12 |
| #3 | COS4 | COS28+COS4 | COS28-COS4 |
| #4 | COS24_SQR T_2 | COS24_SQRT_2+COS8_S QRT_2 | -COS24_SQRT_2+COS8_ SQRT_2 |
| #5 | COS24_SQR T_2 | COS24_SQRT_2+COS8_S QRT_2 | -COS24_SQRT_2+COS8_ SQRT_2 |
| #6 | -COS18 | -COS18+COS14 | COS18+COS14 |
| #7 | -COS22 | COS10-COS22 | COS10+COS22 |
| #8 | -COS30 | COS2-COS30 | COS2+COS30 |
| #9 | -COS26 | -COS26+COS6 | COS26+COS6 |
| #10 | COS20_SQR T_2 | COS20_SQRT_2-COS12_ SQRT_2 | -COS20_SQRT_2-COS12_ SQRT_2 |
| #11 | COS28_SQR T_2 | COS28_SQRT_2+COS4_S QRT_2 | -COS28_SQRT_2+COS4_ SQRT_2 |
| #12 | COS4_SQRT _2 | COS28_SQRT_2+COS4_S QRT_2 | COS28_SQRT_2-COS4_S QRT_2 |
| #13 | COS20_SQR T_2 | COS20_SQRT_2+COS12_ SQRT_2 | -COS20_SQRT_2+COS12_ SQRT_2 |
| #14 | COS4 | COS28+COS4 | COS28-COS4 |
| #15 | COS12 | -COS20+COS12 | -COS20-COS12 |
| #16 | COS24_SQR T_2 | COS8_SQRT_2+COS24_S QRT_2 | COS8_SQRT_2-COS24_S QRT_2 |
| #17 | -COS24_SQR T_2 | -COS8_SQRT_2-COS24_S QRT_2 | -COS8_SQRT_2+COS24_ SQRT_2 |
| #18 | COS12 | COS20+COS12 | COS20-COS12 |
| #19 | -COS28 | -COS28-COS4 | COS28-COS4 |
| #20 | COS23 | COS23-COS9 | -COS23- COS9 |
| #21 | -COS21 | -COS11-COS21 | -COS11 +COS21 |
| #22 | COS19 | COS19+COS13 | -COS19+COS13 |
| #23 | -COS17 | COS15-COS17 | COS15+COS17 |
| #24 | COS31 | COS31-COS1 | -COS31- COS1 |
| #25 | -COS29 | -COS3- COS29 | -COS3+ COS29 |
| #26 | COS27 | COS27+ COS5 | -COS27+ COS5 |
| #27 | COS25 | COS7+COS25 | COS7-COS25 |

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

**Claims**

1.  A method of transforming an image, the method comprising:

    obtaining scaled elements having integer values by scaling elements forming a transformation matrix used for N point discrete cosine transform (DCT), wherein N is an integer, by using a predetermined scaling factor;
    performing the N point DCT by using an integer transformation matrix formed of the scaled elements having integer values; and
    de-scaling result values of performing the N point DCT by using the predetermined scaling factor.

2.  The method of claim 1, wherein the obtaining of the scaled elements having integer values comprises scaling the elements to integer values by using a square value of the predetermined scaling factor.

3.  The method of claim 1, wherein, when S denotes the predetermined scaling factor, S has a value of power of 2, and the obtaining of the scaled elements having integer values further comprises scaling integer values obtained by rounding off the elements to which the predetermined scaling factor is multiplied, by using a left shift operation (<<) by a $\log_2 S$ bit.

4.  The method of claim 1, wherein the performing of the N point DCT comprises:

    changing operations U=C1 *X-C0*Y and V=C0*X+C1*Y, wherein C0 and C1 are predetermined real numbers, for obtaining result values U and V, wherein U and V are real numbers, with respect to intermediate values X and Y, wherein X and Y are real numbers, from among operations forming the N point DCT to operations T=C0*(X+Y), U=C1_p_C0*X-T, and V=T+C1_m_C0*Y (C1_p_C0=C1+C0 and C1_m_C0=C1-C0); and
    obtaining the result values U and V by performing operations on input values X and Y by using the operations T=C0*(X+Y), U=C1_p_C0*X-T, and V=T+C1_m_C0*Y.

5.  The method of claim 1, wherein the de-scaling is performed by being combined to a quantization process with respect to result values of the N point DCT.

6.  The method of claim 5, wherein the predetermined scaling factor has a value of power of 2, and the quantization process further comprises de-scaling the result values of the N point DCT via a right shift operation (>>).

7.  An apparatus for transforming an image, the apparatus comprising a transformer for obtaining scaled elements having integer values by scaling elements forming a transformation matrix used for N point discrete cosine transform (DCT), wherein N is an integer, by using a predetermined scaling factor, performing the N point DCT by using an integer transformation matrix formed of the scaled elements having integer values, and de-scaling result values of performing the N point DCT by using the predetermined scaling factor.

8.  A method of inverse-transforming an image, the method comprising:

    obtaining scaled elements having integer values by scaling elements forming an inverse transformation matrix used for N point inverse discrete cosine transform (IDCT), wherein N is an integer, by using a predetermined scaling factor;
    performing the N point IDCT by using an integer inverse transformation matrix formed of the scaled elements having integer values; and
    de-scaling result values of performing the N point IDCT by using the predetermined scaling factor.

9.  The method of claim 8, wherein the obtaining of the scaled elements having integer values comprises scaling the elements to integer values by using a square value of the predetermined scaling factor.

10. The method of claim 8, wherein, when S denotes the predetermined scaling factor, S has a value of power of 2, and

the obtaining of the scaled elements having integer values further comprises scaling integer values obtained by rounding off the elements to which the predetermined scaling factor is multiplied, by using a left shift operation (<<) by a $\log_2 S$ bit.

11. The method of claim 8, wherein the performing of the N point IDCT comprises:

changing operations U=C1 *X-C0*Y and V=C0*X+C1*Y, wherein C0 and C1 are predetermined real numbers, for obtaining result values U and V, wherein U and V are real numbers, with respect to intermediate values X and Y, wherein X and Y are real numbers, from among operations forming the N point IDCT to operations T=C0*(X+Y), U=C1_p_C0*X-T, and V=T+C1_m_C0*Y (C1_p_C0=C1+C0 and C1_m_C0=C1-C0); and obtaining the result values U and V by performing operations on input values X and Y by using the operations T=C0*(X+Y), U=C1_p_C0*X-T, and V=T+C1_m_C0*Y.

12. The method of claim 8, wherein the de-scaling is performed by being combined to an inverse quantization process.

13. The method of claim 12, wherein the predetermined scaling factor has a value of power of 2, and the inverse quantization process further comprises de-scaling values obtained by quantizing result values of an N point DCT extracted from a bitstream, via a right shift operation (>>).

14. The method of claim 8, wherein the scaled elements having integer values are pre-calculated and stored.

15. An apparatus for inverse-transforming an image, the apparatus comprising:

an inverse-transformer for obtaining scaled elements having integer values by scaling elements forming an inverse transformation matrix used for N point inverse discrete cosine transform (IDCT), wherein N is an integer, by using a predetermined scaling factor, performing the N point IDCT by using an integer inverse transformation matrix formed of the scaled elements having integer values, and de-scaling result values of performing the N point IDCT by using the predetermined scaling factor.

EP 2 723 075 A2

# FIG. 1

100

| | 110 | | 115 | | 120 | | 130 | | 140 |

PREDICTOR → (−) (+) 115 → TRANSFORMER → QUANTIZER → ENTROPY ENCODER →

## FIG. 2

200

210

x0 — R(-pi/4) — y0
x1 — -y16
x2 — R(-pi*3/8) — y8
x3 — y24
x4 — R(-pi*7/16) — y4
x5 — R(-pi*5/16) — R(-pi/4) — y12
x6 — y28
x7 — -y20
x8 — R(-pi*7/32) — R(-pi*3/8) — y6
x9 — y26
x10 — R(-pi*3/32) — y18
x11 — R(-pi*15/32) — R(-pi/4) — y30
x12 — y2
x13 — R(pi*11/32) — y14
x14 — R(-pi*3/8) — -y22
x15 — R(-pi*3/16) — y10
x16 — -y3
x17 — R(-pi*13/64) — -y29
x18 — R(-pi/16) — R(pi/4) — -y13
x19 — R(-pi*9/64) — -y19
x20 — -y23
x21 — R(-pi*5/64) — R(-pi/8) — y9
x22 — y15
x23 — R(-pi/64) — R(-pi/4) — -y31
x24 — R(pi*29/64) — y1
x25 — y17
x26 — R(pi*25/64) — R(-pi/8) — -y7
x27 — -y25
x28 — R(pi*21/64) — -y11
x29 — R(-pi/4) — -y27
x30 — R(pi*17/64) — R(-pi/4) — -y21
x31 — y5

# FIG. 3

START

OBTAIN SCALED ELEMENTS HAVING INTEGER VALUES BY SCALING
ELEMENTS FORMING TRANSFORMATION MATRIX USED FOR
32 POINT DCT BY USING PREDETERMINED SCALING FACTOR — 310

PERFORM N POINT DCT BY USING TRANSFORMATION MATRIX
FORMED OF SCALED ELEMENTS HAVING INTEGER VALUES — 320

DE-SCALE RESULT VALUES OF PERFORMING N POINT DCT BY
USING SCALING FACTOR — 330

END

FIG. 4

# FIG. 5

| SIGN | MEANING | EXAMPLE | NUMBER OF TIMES ACCORDING TO OPERATIONS |
|---|---|---|---|
| # X★ ★U  Y★ ★V | U=C1* X− C0* Y  V= C0*X+ C1*Y | T = C0*(X+Y)  U=C1_p_C0* X− T  V= T+ C1_m_C0*Y  (C1_p_C0= C1+C0  C1_m_C0= C1−C0) | "*" 3, "+" 3 |
| (crossing ⊕ ⊖ symbol) | U = X + Y  V = X − Y | | "+" 2 |
| (triangle) | U = X << S_BIT | | "<<" 1 |
| (double triangle) | U = X << (S_BIT*2) | | "<<" 1 |
| (⊗ symbol) | U = X * SQRT_2 | | "*" 1 |
| X  Y —⊖–U | U = X − Y | | "+" 1 |
| X  Y —⊕–U | U = X + Y | | "+" 1 |

# FIG. 6

$$\begin{bmatrix} Y_1 \\ Y_2 \end{bmatrix} = \begin{bmatrix} \cos\theta & -\sin\theta \\ \sin\theta & \cos\theta \end{bmatrix} \begin{bmatrix} X_1 \\ X_2 \end{bmatrix}$$

FIG. 7A

440

X1 #2   Y1
X2 #3   Y2
X3      Y3
X4      Y4

FIG. 7B

X1 #2   Y1

X4      Y4

FIG. 7C

X2 #3   Y2
X3      Y3

# FIG. 8

/ 800

/ 810
ENTROPY DECODER

/ 820
INVERSE -QUANTIZER

/ 830
INVERSE -TRANSFORMER

/ 840
PREDICTOR

# FIG. 9

START

OBTAIN SCALED ELEMENTS HAVING INTEGER VALUES BY SCALING ELEMENTS FORMING INVERSE TRANSFORMATION MATRIX USED FOR N POINT IDCT, BY USING PREDETERMINED SCALING FACTOR — 910

PERFORM N POINT IDCT BY USING INVERSE TRANSFORMATION MATRIX FORMED OF SCALED ELEMENTS HAVING INTEGER VALUES — 920

DE-SCALE RESULT VALUES OF PERFORMING N POINT IDCT BY USING PREDETERMINED SCALING FACTOR — 930

END

FIG. 10